(19) **Europäisches Patentamt / European Patent Office / Office européen des brevets**

(11) **EP 4 177 564 B1**

(12) **EUROPEAN PATENT SPECIFICATION**

(45) Date of publication and mention of the grant of the patent:
**08.04.2026 Bulletin 2026/15**

(21) Application number: **21832169.3**

(22) Date of filing: **09.06.2021**

(51) International Patent Classification (IPC):
***G01B 11/02*** *(2006.01)*

(52) Cooperative Patent Classification (CPC):
**G01B 11/03;** G01B 11/24

(86) International application number:
**PCT/JP2021/021985**

(87) International publication number:
**WO 2022/004317 (06.01.2022 Gazette 2022/01)**

(54) **MEASUREMENT DEVICE**

MESSVORRICHTUNG

DISPOSITIF DE MESURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.07.2020 JP 2020114374**

(43) Date of publication of application:
**10.05.2023 Bulletin 2023/19**

(73) Proprietor: **Kyocera Corporation**
**Kyoto-shi Kyoto 612-8501 (JP)**

(72) Inventor: **OKADA, Hiroki**
**Kyoto-shi, Kyoto 612-8501 (JP)**

(74) Representative: **Viering, Jentschura & Partner mbB**
**Patent- und Rechtsanwälte**
**Am Brauhaus 8**
**01099 Dresden (DE)**

(56) References cited:
**WO-A1-2013/146269      WO-A1-2019/216140**
**JP-A- 2018 200 927      US-A1- 2012 236 320**
**US-A1- 2015 062 305      US-A1- 2016 003 937**
**US-A1- 2020 174 101**

**Description**

TECHNICAL FIELD

The present disclosure relates to a measurement apparatus.

BACKGROUND OF INVENTION

There is known a configuration in which the actual dimensions of a subject in a captured image are calculated on the basis of data regarding an object distance, the focal length of a camera lens, or the like and data regarding a scale length set within the field of view of a viewfinder (see, for example, Patent Literature 1).

CITATION LIST

PATENT LITERATURE

Patent Literature 1: Japanese Unexamined Patent Application Publication No. 62-259004
Moreover, US 2015/062305 A1 discloses an image capturing device including at least two image sensors and an image processing unit that performs image processing on image information that is captured by image sensors and an image display unit that displays the image information on which the image processing is performed by the image processing unit;
US 2012/236320 A1 discloses a laser tracker that automatically identifies each of a plurality of retroreflector targets placed on an object using one or more locator cameras associated with the laser tracker; US 2016/003937 A discloses a time-of-flight sensor device that generates and analyzes a high-resolution depth map frame from a high-resolution image;
WO 2019/216140 A1 discloses an electromagnetic-wave detection device provided with: a first advancing unit having a reference surface and a plurality of pixels, a detection unit, and a second advancing unit having a first surface facing the reference surface, a second surface facing the detection surface, and a third surface intersecting with the first surface and the second surface; and US 2020/174101 A1 discloses an electromagnetic wave detection apparatus including a separation unit, a first detector, a switch, and a second detector.

SUMMARY

The present invention provides a measurement apparatus according to claim 1. Preferred embodiments are described in the dependent claims.

BRIEF DESCRIPTION OF THE DRAWINGS

FIG. 1 is a diagram illustrating a schematic configuration of an electromagnetic-wave detection apparatus according to an embodiment.
FIG. 2 is a diagram illustrating a travelling direction of an electromagnetic wave in a first state and a second state of the electromagnetic-wave detection apparatus illustrated in FIG. 1.
FIG. 3 is a diagram for describing detection of electromagnetic waves including a reflected wave.
FIG. 4 is a timing chart for describing distance calculation.
FIG. 5 is a diagram illustrating calculation of distance-measurement points of an object when the X-coordinate is not taken into consideration.
FIG. 6 is a diagram illustrating the difference between a result of size calculation based on a distance in the case where the object is tilted and a result of size calculation based on an image.
FIG. 7 is a diagram illustrating calculation of distance-measurement points of the object when the X-coordinate is taken into consideration.
FIG. 8 is a plan view illustrating the positions of distance-measurement points in an XY plane.
FIG. 9 is a perspective view illustrating the positions of distance-measurement points in the XY plane.
FIG. 10 is a diagram illustrating the case of measuring the diameter of a wheel, which is the object.
FIG. 11 is a diagram illustrating the case of measuring the body length of a fish, which is the object.

FIG. 12 is a flowchart illustrating an example of a method of measuring a size on the basis of distance-measurement information.

FIG. 13 is a flowchart illustrating an example of a method of measuring a size by correcting, on the basis of an image, the coordinates calculated on the basis of distance-measurement information.

FIG. 14 is a diagram illustrating a configuration example in which distance-measurement information items regarding a vehicle on a road surface is acquired from a direction in which the road surface is viewed in plan view.

FIG. 15 is a graph in which distance-measurement information items acquired in the case illustrated in FIG. 14 are plotted.

FIG. 16 is a flowchart illustrating an example of a method of measuring the height of a vehicle on a road surface.

## DESCRIPTION OF EMBODIMENTS

In a configuration in which the actual dimensions of a subject in a captured image are calculated, length measurement errors may sometimes occur due to variations in distance-measurement information regarding the focus of an interchangeable lens. In addition, in the case where the subject is tilted with respect to the optical axis of a lens, the distance between a camera and the subject changes, so that a position on a sensor that detects a light reflected by the subject changes. As a result, length measurement errors may sometimes occur. There is a need to reduce such length measurement errors.

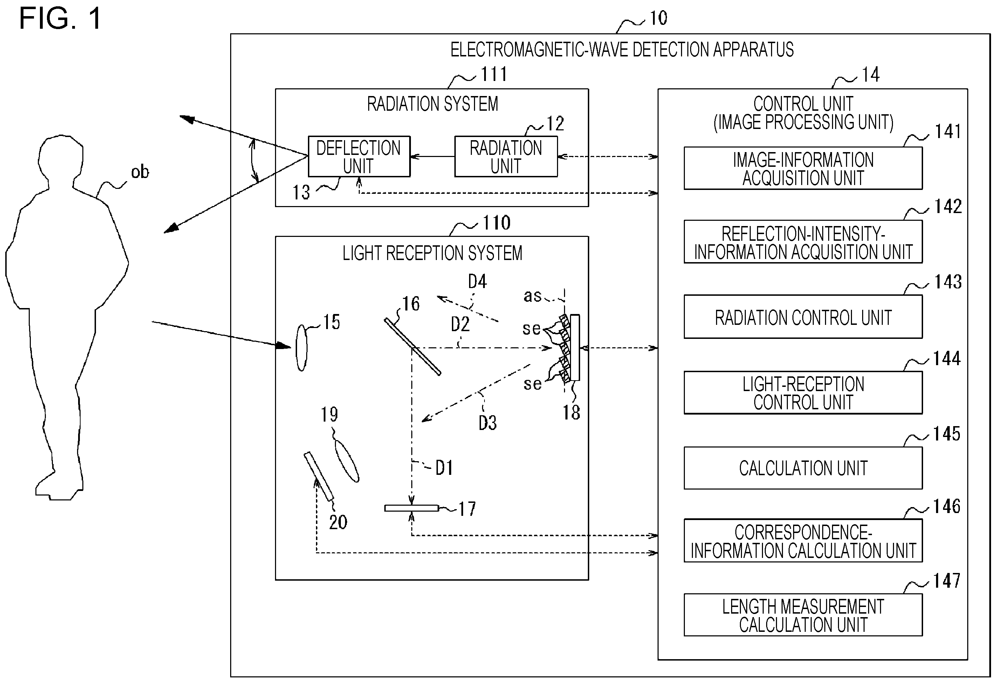

As illustrated in FIG. 1, according to an embodiment, an electromagnetic-wave detection apparatus 10 includes a radiation system 111, a light reception system 110, and a control unit 14. According to the present embodiment, the electromagnetic-wave detection apparatus 10 functions as a distance-measurement apparatus. In the present embodiment, the electromagnetic-wave detection apparatus 10 includes the single radiation system 111 and the single light reception system 110. The electromagnetic-wave detection apparatus 10 is not limited to including the single radiation system 111 and the single light reception system 110 and may include two or more radiation systems 111 and two or more light reception systems 110. In the case where the electromagnetic-wave detection apparatus 10 includes multiple radiation systems 111 and multiple light reception systems 110, the radiation systems 111 correspond in one-to-one to the light reception systems 110.

The radiation system 111 includes a radiation unit 12 and a deflection unit 13. The light reception system 110 includes an incident unit 15, a separation unit 16, a first detection unit 20, a second detection unit 17, a switching unit 18, and a first subsequent-stage optical system 19. The control unit 14 includes an image-information acquisition unit 141, a reflection-intensity-information acquisition unit 142, a radiation control unit 143, a light-reception control unit 144, a calculation unit 145, and a correspondence-information calculation unit 146. Details of each functional block of the electromagnetic-wave detection apparatus 10 will be described later.

In the drawings, dashed lines connecting the functional blocks each indicate a flow of a control signal or a flow of information that is transmitted and received. Each of the communications indicated by the dashed lines may be wired communication or may be wireless communication. In the drawings, solid arrows each indicate an electromagnetic wave in the form of a beam, and an object ob is a subject of the electromagnetic-wave detection apparatus 10. The subject may include, for example, objects such as a road, a median strip, a sidewalk, a roadside tree, and a vehicle and may include a person. There may be one or more objects ob.

The electromagnetic-wave detection apparatus 10 acquires an image including a subject and is capable of identifying the subject by detecting a reflected wave reflected by the subject. The electromagnetic-wave detection apparatus 10 includes the calculation unit 145 that measures a distance to the object ob, so that the electromagnetic-wave detection apparatus 10 functions as a distance-measurement apparatus.

(Configuration Example of Radiation System 111)

The radiation system 111 radiates an electromagnetic wave into a space in which the object ob is present. In the present embodiment, the radiation system 111 radiates an electromagnetic wave radiated by the radiation unit 12 toward the space in which the object ob is present via the deflection unit 13. As another example, the radiation system 111 may have a configuration in which the radiation unit 12 directly radiates an electromagnetic wave toward the object ob.

The radiation unit 12 radiates at least one of an infrared ray, a visible light ray, an ultraviolet ray, and a radio wave. In the present embodiment, the radiation unit 12 radiates an infrared ray. In addition, in the present embodiment, the radiation unit 12 radiates an electromagnetic wave in the form of a narrow beam with a divergence angle of, for example, 0.5 degrees. The radiation unit 12 radiates an electromagnetic wave in pulses. The radiation unit 12 may include, for example, a light emitting diode (LED) as an electromagnetic-wave radiation element. Alternatively, the radiation unit 12 may include, for example, a laser diode (LD) as an electromagnetic-wave radiation element. The radiation unit 12 is switched to perform radiation of an electromagnetic wave and to stop radiation of the electromagnetic wave under control of the control unit 14. Here, the radiation unit 12 may form an LED array or an LD array that includes multiple electromagnetic-wave radiation elements arranged in an array and may radiate multiple beams simultaneously.

The deflection unit 13 causes the electromagnetic wave radiated by the radiation unit 12 to be output in different directions so as to change a position to be irradiated with the electromagnetic wave, which is radiated into the space in which the object ob is present. The deflection unit 13 may cause the electromagnetic wave to be output in different directions by reflecting the electromagnetic wave from the radiation unit 12 while changing the orientation of the deflection unit 13. For example, the deflection unit 13 causes the electromagnetic wave radiated by the radiation unit 12 to scan the object ob in a one-dimensional direction or a twodimensional direction. Here, if the radiation unit 12 is configured as, for example, an LD array, the deflection unit 13 may reflect all the multiple beams that are output by the LD array so as to cause them to be output in the same direction. In other words, the radiation system 111 may include the single deflection unit 13 for the radiation unit 12 that includes one or more electromagnetic-wave radiation elements.

The deflection unit 13 is configured such that at least a portion of an irradiation region that is a space to which an electromagnetic wave is output is included in an electromagnetic-wave detection range of the light reception system 110. Thus, at least part of an electromagnetic wave that is radiated into the space in which the object ob is present via the deflection unit 13 is reflected by at least a portion of the object ob and may be detected by the light reception system 110. Here, an electromagnetic wave that is a radiation wave reflected by at least a portion of the object ob will hereinafter be referred to as a reflected wave. The radiation wave is an electromagnetic wave that is radiated from the radiation system 111 in multiple directions in the space in which the object ob is present.

The deflection unit 13 includes, for example, a micro-electromechanical systems (MEMS) mirror, a polygon mirror, or a galvanometer mirror. In the present embodiment, the deflection unit 13 includes a MEMS mirror.

The deflection unit 13 changes a direction in which the deflection unit 13 reflects an electromagnetic wave under control of the control unit 14. The deflection unit 13 may include an angle sensor such as, for example, an encoder. The deflection unit 13 may output, to the control unit 14, an angle that is detected by the angle sensor as direction information regarding a direction in which an electromagnetic wave is reflected. In such a configuration, the control unit 14 may calculate an irradiation position of an electromagnetic wave on the basis of the direction information received from the deflection unit 13. The control unit 14 may also calculate the irradiation position on the basis of a drive signal that is input in order to cause the deflection unit 13 to change the direction in which the deflection unit 13 reflects an electromagnetic wave.

(Configuration Example of Light Reception System 110)

In the following description, the phrase "electromagnetic waves including a reflected wave" refers to electromagnetic waves that includes a reflected wave reflected by the object ob and that are incident on the light reception system 110. In other words, electromagnetic waves that are incident on the light reception system 110 may sometimes be referred to as "electromagnetic waves including a reflected wave" in order to distinguish them from the radiation wave. The electromagnetic waves including a reflected wave include not only the reflected wave, which is the electromagnetic wave that is radiated by the radiation system 111 and reflected by the object ob, but also outside light, such as sunlight, and light that is outside light reflected by the object ob.

The incident unit 15 is an optical system including at least one optical element and forms an image of the object ob, which is a subject. The optical element includes, for example, at least one selected from the group consisting of a lens, a mirror, a diaphragm, an optical filter, and the like.

The separation unit 16 is disposed between the incident unit 15 and a first image-forming position that is a position where the incident unit 15 forms an image of the object ob spaced apart from the incident unit 15 by a predetermined distance. The separation unit 16 separates the electromagnetic waves including a reflected wave in accordance with their wavelengths in such a manner that each wave travels in a first direction D1 or a second direction D2. The separation unit 16 may separate the electromagnetic waves including a reflected wave into a reflected wave and the other electromagnetic waves. The other electromagnetic waves may include, for example, light such as visible light.

In the present embodiment, the separation unit 16 reflects part of the electromagnetic waves including a reflected wave in the first direction D1 and enables another part of them to pass therethrough in the second direction D2. In the present embodiment, the separation unit 16 reflects, in the first direction D1, visible light that is included in the electromagnetic waves incident on the separation unit 16 and that is environmental light, such as sunlight, reflected by the object ob. The separation unit 16 enables an infrared ray that is included in the electromagnetic waves incident on the separation unit 16 and that is radiated by the radiation unit 12 and reflected by the object ob to pass therethrough in the second direction D2. As another example, the separation unit 16 may enable part of the electromagnetic waves, which are incident on the separation unit 16, to pass therethrough in the first direction D1 and may reflect another part of the electromagnetic waves in the second direction D2. The separation unit 16 may refract part of the electromagnetic waves, which are incident on the separation unit 16, in the first direction D1 and may refract another part of the electromagnetic waves in the second direction D2. The separation unit 16 may include, for example, a half mirror, a beam splitter, a dichroic mirror, a cold mirror, a hot mirror, a metasurface, a deflection element, a prism, or the like.

The second detection unit 17 is disposed on a path of an electromagnetic wave that travels in the first direction D1 from the separation unit 16. The second detection unit 17 is disposed at an image-forming position in the first direction D1 where an image of the object ob is formed or is disposed in the vicinity of this image-forming position. The second detection unit 17 detects an electromagnetic wave that has travelled in the first direction D1 from the separation unit 16.

The second detection unit 17 may be disposed with respect to the separation unit 16 in such a manner that a first travelling axis of the electromagnetic wave that travels in the first direction D1 from the separation unit 16 is parallel to a first detection axis of the second detection unit 17. The first travelling axis corresponds to the central axis of an electromagnetic wave that travels in the first direction D1 from the separation unit 16 while spreading radially. In the present embodiment, the first travelling axis is an axis that is obtained by extending an optical axis of the incident unit 15 to the separation unit 16 and bending the optical axis at the separation unit 16 to make it parallel to the first direction D1. The first detection axis is an axis that passes through the center of a detection surface of the second detection unit 17 and that is perpendicular to the detection surface.

The second detection unit 17 may be disposed in such a manner that the gap between the first travelling axis and the first detection axis is equal to or less than a first gap threshold. Alternatively, the second detection unit 17 may be disposed in such a manner that the first travelling axis and the first detection axis coincide with each other. In the present embodiment, the second detection unit 17 is disposed in such a manner that the first travelling axis and the first detection axis coincide with each other.

The second detection unit 17 may be disposed with respect to the separation unit 16 such that a first angle formed by the first travelling axis and the detection surface of the second detection unit 17 is equal to or less than a first-angle threshold or such that the first angle is the same as a predetermined angle. In the present embodiment, the second detection unit 17 is disposed in such a manner that the first angle is 90 degrees.

In the present embodiment, the second detection unit 17 is a passive sensor. Specifically, in the present embodiment, the second detection unit 17 includes an element array. For example, the second detection unit 17 includes an imaging device such as an image sensor or an imaging array and captures an image formed by an electromagnetic wave focused at the detection surface so as to generate image information of a space including the captured object ob.

More specifically, in the present embodiment, the second detection unit 17 captures a visible-light image. The second detection unit 17 transmits generated image information as a signal to the control unit 14. The second detection unit 17 may capture images, such as an infrared-ray image, an ultraviolet-ray image, and a radio-wave image, other than a visible-light image.

The switching unit 18 is disposed on a path of an electromagnetic wave that travels in the second direction D2 from the separation unit 16. The switching unit 18 is disposed at a first image-forming position in the second direction D2 where an image of the object ob is formed or is disposed in the vicinity of the first image-forming position.

In the present embodiment, the switching unit 18 is disposed at the image-forming position. The switching unit 18 has an action surface as on which an electromagnetic wave that has passed through the incident unit 15 and the separation unit 16 is incident. The action surface as is formed of multiple switching elements se arranged two-dimensionally. The action surface as produces actions on an electromagnetic wave, such as, for example, reflection of the electromagnetic wave and transmission of the electromagnetic wave, in at least one of a first state and a second state, which are described below.

The switching unit 18 can switch the state of each of the switching elements se between the first state in which the switching element se causes an electromagnetic wave that is incident on the action surface as to travel in a third direction D3 and the second state in which the switching element se causes the electromagnetic wave to travel in a fourth direction D4. In the present embodiment, the first state is a first reflective state in which an electromagnetic wave that is incident on the action surface as is reflected in the third direction D3. The second state is a second reflective state in which the electromagnetic wave is reflected in the fourth direction D4.

More specifically, in the present embodiment, each of the switching elements se of the switching unit 18 has a reflective surface at which an electromagnetic wave is reflected. The switching unit 18 switches the state of each of the switching elements se between the first reflective state and the second reflective state by arbitrarily changing the orientation of the reflective surface of the switching element se.

In the present embodiment, the switching unit 18 includes, for example, a digital micro-mirror device (DMD). The DMD can switch the state of the reflective surface of each of the switching elements se between a state in which the reflective surface is inclined at +12 degrees with respect to the action surface as and a state in which the reflective surface is inclined at -12 degrees with respect to the action surface as by driving a micro-reflective surface included in the action surface as. The action surface as is parallel to a plate surface of a substrate of the DMD on which the micro-reflective surface is placed.

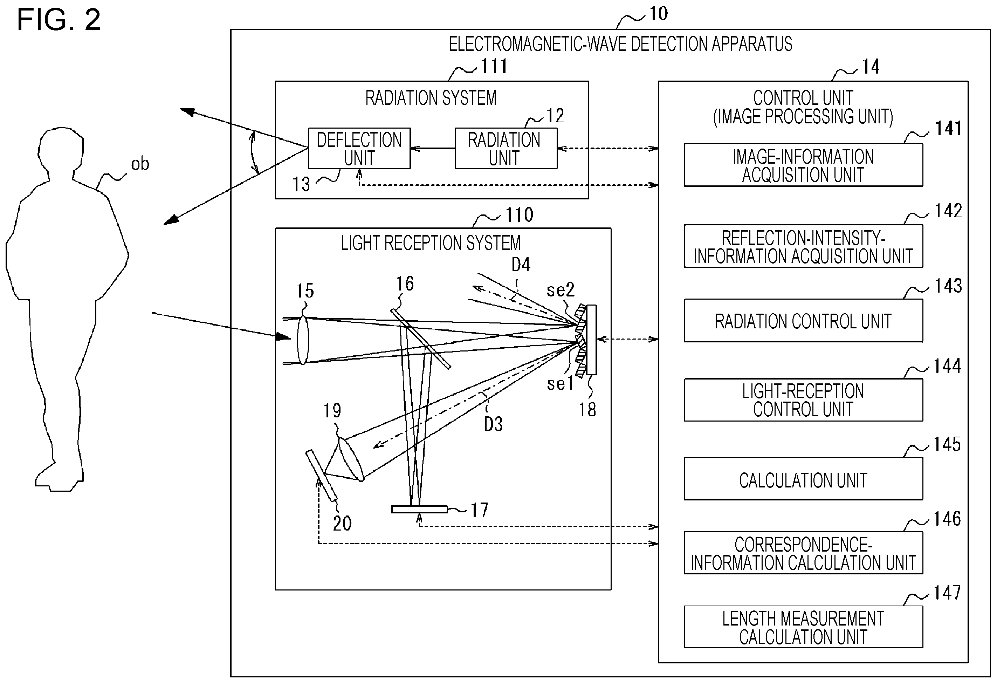

The switching unit 18 switches the state of each of the switching elements se between the first state and the second state under control of the control unit 14. As illustrated in FIG. 2, for example, the switching unit 18 may cause an electromagnetic wave that is incident on switching elements se1, which are some of the switching elements se, to travel in the third direction D3 by switching the state of each of the switching elements se1 to the first state. The switching unit 18 may cause an electromagnetic wave that is incident on a switching element se2, which is one of the switching elements se and which is different from the switching elements se1, to travel in the fourth direction D4 by switching the state of the switching element se2 to the second state. The switching unit 18 may switch the states of the multiple switching elements simultaneously. More specifically, the control unit 14 detects a direction in which an electromagnetic wave is radiated or an irradiation position of the electromagnetic wave on the basis of direction information received from the deflection unit 13. Then, the control unit 14 brings one of the switching elements se1 that corresponds to the detected direction in which the electromagnetic wave is radiated or the detected irradiation position into the first state and brings the rest of the switching elements se1 into the second state so as to selectively cause a reflected wave from the object ob to travel in the third direction D3. Among the electromagnetic waves that have passed through the separation unit 16, the electromagnetic waves excluding a reflected wave from the object ob travel in the fourth direction D4 and thus will not be incident on the first detection unit 20.

As illustrated in FIG. 1, the first subsequent-stage optical system 19 is disposed in the third direction D3 from the switching unit 18. The first subsequent-stage optical system 19 includes, for example, at least one of a lens and a mirror. The first subsequent-stage optical system 19 focuses an electromagnetic wave whose travelling direction has been switched by the switching unit 18 so as to form an image of the object ob.

The first detection unit 20 detects a reflected wave. The first detection unit 20 is disposed at a position at which the first detection unit 20 can detect an electromagnetic wave that is caused by the switching unit 18 to travel in the third direction D3 and then to further travel through the first subsequent-stage optical system 19. The first detection unit 20 detects an electromagnetic wave that has passed through the first subsequent-stage optical system 19, that is, an electromagnetic wave that has travelled in the third direction D3, and outputs a detection signal.

The first detection unit 20 may be arranged together with the switching unit 18 with respect to the separation unit 16 in such a manner that a second travelling axis of an electromagnetic wave that travels in the second direction D2 from the separation unit 16 and that is caused to travel in the third direction D3 by the switching unit 18 is parallel to a second detection axis of the first detection unit 20. The second travelling axis corresponds to the central axis of an electromagnetic wave that travels in the third direction D3 from the switching unit 18 and that propagates while spreading radially. In the present embodiment, the second travelling axis is an axis that is obtained by extending the optical axis of the incident unit 15 to the switching unit 18 and bending the optical axis at the switching unit 18 to make it parallel to the third direction D3. The second detection axis is an axis that passes through the center of a detection surface of the first detection unit 20 and that is perpendicular to the detection surface.

The first detection unit 20 may be arranged together with the switching unit 18 in such a manner that the gap between the second travelling axis and the second detection axis is equal to or less than a second gap threshold. The second gap threshold may be the same as or different from the first gap threshold. Alternatively, the first detection unit 20 may be disposed in such a manner that the second travelling axis and the second detection axis coincide with each other. In the present embodiment, the first detection unit 20 is disposed in such a manner that the second travelling axis and the second detection axis coincide with each other.

The first detection unit 20 may be arranged together with the switching unit 18 with respect to the separation unit 16 such that a second angle formed by the second travelling axis and the detection surface of the first detection unit 20 is equal to or less than a second-angle threshold or such that the second angle is the same as a predetermined angle. The second-angle threshold may be the same as or different from the first-angle threshold. In the present embodiment, the first detection unit 20 is disposed in such a manner that the second angle is 90 degrees as mentioned above.

In the present embodiment, the first detection unit 20 is an active sensor that detects a reflected wave of an electromagnetic wave radiated from the radiation unit 12 toward the object ob. The first detection unit 20 includes, for example, a single element such as an avalanche photodiode (APD), a photodiode (PD), or a distance-measurement image sensor. The first detection unit 20 may include an element array such as an APD array, a PD array, a distance-measurement imaging array, or a distance-measurement image sensor.

In the present embodiment, the first detection unit 20 transmits, as a signal, detection information indicating that a reflected wave from a subject has been detected to the control unit 14. More specifically, the first detection unit 20 detects an electromagnetic wave in an infrared band.

In the present embodiment, the first detection unit 20 is used as a detection element for measuring a distance to the object ob. In other words, the first detection unit 20 is an element included in a distance-measurement sensor, and an image of the object ob is not necessarily formed at the detection surface of the first detection unit 20 as long as the first detection unit 20 can detect an electromagnetic wave. Thus, the first detection unit 20 does not need to be disposed at a second image-forming position that is a position at which an image is formed by the first subsequent-stage optical system 19. That is to say, in this configuration, the first detection unit 20 may be disposed at any position on a path of an electromagnetic wave that travels through the first subsequent-stage optical system 19 after being caused by the switching unit 18 to travel in the third direction D3 as long as the first detection unit 20 is disposed at a position where an electromagnetic wave can be incident on the detection surface thereof from all angles of view.

With a configuration such as that described above, the electromagnetic-wave detection apparatus 10 matches a predetermined position on an image with the optical axis of a reflected wave used for measuring a distance to the predetermined position. In other words, in the electromagnetic-wave detection apparatus 10, the optical axis of the image-information acquisition unit 141 that acquires an image and the optical axis of the light reception system 110 that receives a reflected wave of the electromagnetic wave used for acquiring range information, coincide with each other. The image-information acquisition unit 141 will also be referred to as an image-capturing unit. The configuration including the light reception system 110 for acquiring range information will also be referred to as a distance-measurement unit. It can be said that the image-capturing unit and the distance-measurement unit share an optical axis.

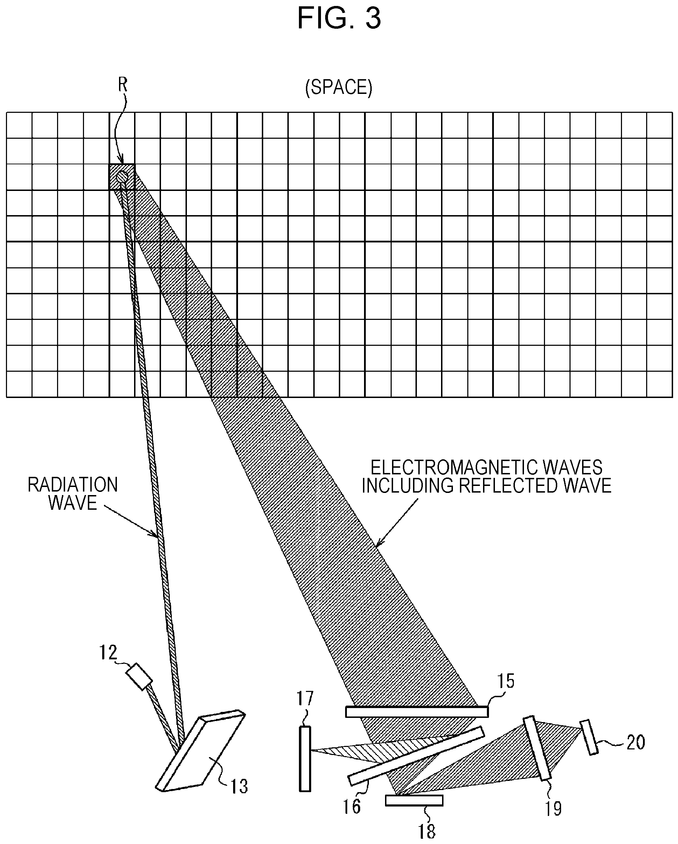

FIG. 3 is a diagram for describing detection of the electromagnetic waves including a reflected wave. In FIG. 3, the space in which the object ob is present is divided by the number of times per frame the radiation system 111 radiates an electromagnetic wave and partitioned in a grid-like pattern. In general, the time taken to detect the electromagnetic waves including a reflected wave for one frame is longer than the time taken for an imaging device or the like to acquire an image for one frame. As an example, an imaging device can acquire 30 frames of images each having 1920× 1080 pixels per second. In contrast, the time taken to perform distance measurement by receiving a reflected wave of the radiated electromagnetic wave may sometimes be 20 μs for one point. Thus, the number of locations (the number of points) at which distance-measurement information is acquired by receiving a reflected wave from the space is smaller than 1920× 1080 per frame.

In the case illustrated in FIG. 3, a beam-shaped electromagnetic wave radiated from the radiation unit 12 is reflected by the deflection unit 13 and is incident on one region R of the space as the radiation wave. In the present embodiment, the radiation wave is an infrared ray. The electromagnetic waves including a reflected wave that is reflected by the object ob present in the region R are incident on the incident unit 15. In the present embodiment, the reflected wave is an infrared ray. In addition, the electromagnetic waves including a reflected wave include visible light that is outside light reflected by the object ob present in the region R. The separation unit 16 reflects the visible light that is part of the electromagnetic waves including a reflected wave in the first direction D1. The reflected visible light is detected by the second detection unit 17. In addition, the separation unit 16 enables an infrared ray that is part of the electromagnetic waves including a reflected wave to pass therethrough in the second direction D2. The infrared ray that has passed through the separation unit 16 is reflected by the switching unit 18, and at least a part of the infrared ray travels in the third direction D3. The infrared ray travelling in the third direction D3 passes through the first subsequent-stage optical system 19 and is detected by the first detection unit 20.

(Configuration Example of Control Unit)

The radiation control unit 143 controls the radiation system 111. For example, the radiation control unit 143 causes the radiation unit 12 to be switched to perform radiation of an electromagnetic wave and to stop radiation of the electromagnetic wave. For example, the radiation control unit 143 causes the deflection unit 13 to change a direction in which the deflection unit 13 reflects an electromagnetic wave.

The light-reception control unit 144 controls the light reception system 110. For example, the light-reception control unit 144 causes the switching unit 18 to switch the state of each of the switching elements se between the first state and the second state.

The image-information acquisition unit 141 acquires image information of the space in which the object ob is present from the second detection unit 17, which detects an electromagnetic wave from the space.

The calculation unit 145 calculates a distance to the object ob on the basis of detection information acquired by the first detection unit 20. The calculation unit 145 can calculate a distance by, for example, the time-of-flight (ToF) method on the basis of received detection information.

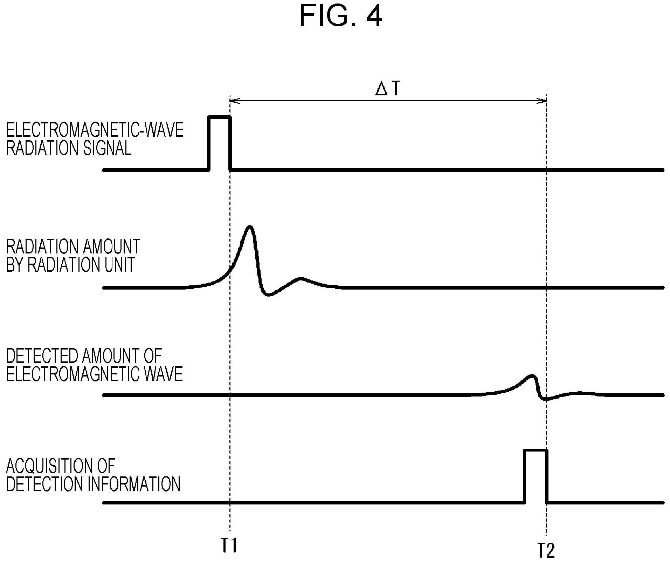

As illustrated in FIG. 4, the control unit 14 inputs an electromagnetic-wave radiation signal to the radiation unit 12 so as to cause the radiation unit 12 to radiate a pulsed electromagnetic wave (see the "electromagnetic-wave radiation signal" field). The radiation unit 12 radiates an electromagnetic wave on the basis of the electromagnetic-wave radiation signal input thereto (see the "radiation amount of radiation unit" field). The electromagnetic wave that is radiated by the radiation unit 12 and reflected by the deflection unit 13 so as to be radiated into an irradiation region that is the space in which the object ob is present is reflected in the irradiation region. In an image-forming region of the switching unit 18, a reflected wave reflected in the irradiation region is focused by the incident unit 15, and the control unit 14 switches the state of at least one of the switching elements se present in the image-forming region of the switching unit 18 to the first state and switches the state of at least one of the rest of the switching elements se to the second state. Then, when the first detection unit 20 detects the electromagnetic wave reflected in the irradiation region (see the "detected amount of electromagnetic wave" field), the first detection unit 20 notifies the control unit 14 of detection information.

The calculation unit 145 acquires information regarding the above-mentioned signal including detection information. The calculation unit 145 includes, for example, a timemeasurement large scale integrated circuit (LSI) and measures a period of time ΔT from a timing T1 at which the radiation unit 12 is caused to radiate an electromagnetic wave to a timing T2 at which detection information is acquired (see the "acquisition of detection information" field). The calculation unit 145 calculates a distance to the position irradiated with the electromagnetic wave by multiplying the period of time ΔT by the speed of light and dividing it by two.

The resolution of distance-measurement information regarding a distance to the object ob, the distance-measurement information being detected by the first detection unit 20, per frame in a planar direction is lower than the resolution of an image of the object ob that is detected by the second detection unit 17. The reason is as follows. First, the resolution of detection of the electromagnetic waves including a reflected wave for acquiring the distance-measurement information is determined by the number of points where a distance is detected by using an electromagnetic wave in a space including the captured object ob, that is, the number of locations where distance-measurement information is acquired. In the case of causing a laser beam to scan a space, the resolution of detection of an electromagnetic wave refers to the number of locations that are irradiated with the laser beam in a single scan of a target space (i.e., the number of locations that are irradiated with the laser beam within the field of view). In contrast, the image of the object ob detected by the second detection unit 17 is captured with pixels arranged at a pitch smaller than the gap between an adjacent two of the locations irradiated with the laser beam because of the improved performance of an imaging device. Thus, the resolution of the distance-measurement information per frame in the planar direction is lower than the resolution of the image. In the following description of the present specification, the resolution of distance-measurement information refers to a resolution per frame in a planar direction. In addition, it can also be said that the resolution of the distance-measurement unit is lower than the resolution of the image-capturing unit.

(Size Calculation Based on Distance-Measurement Information)

According to the present embodiment, the control unit 14 of the electromagnetic-wave detection apparatus 10 further includes a length measurement calculation unit 147. The length measurement calculation unit 147 calculates the size of the object ob on the basis of distance-measurement information regarding a distance to the object ob detected by the first detection unit 20. The electromagnetic-wave detection apparatus 10 will also be referred to as a measurement apparatus. The object ob will also be referred to as a measurement target.

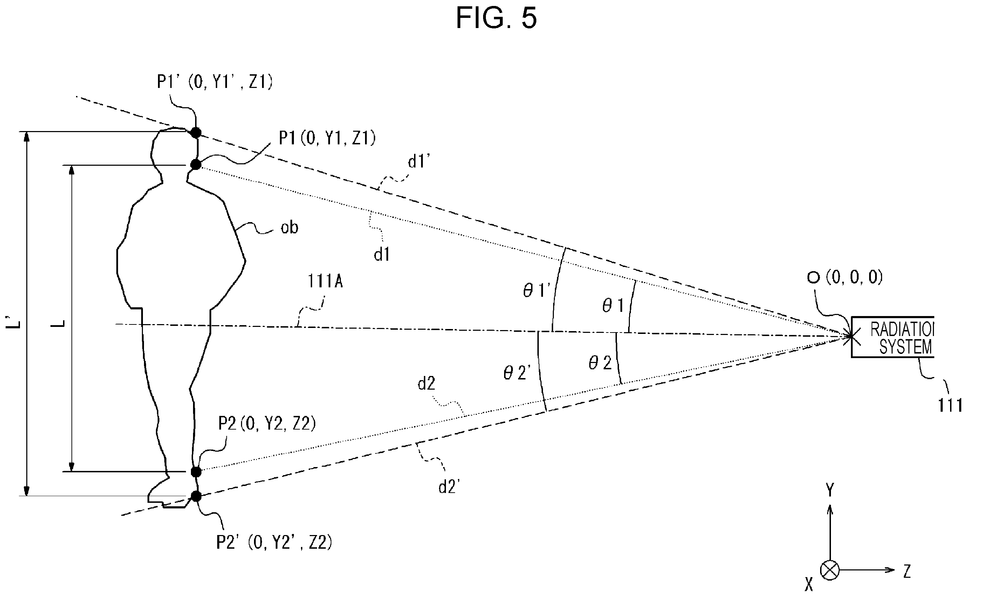

More specifically, the length measurement calculation unit 147 calculates the coordinates of two points included in the object ob on the basis of distance-measurement information and an emission direction of an electromagnetic wave that is radiated for acquiring the distance-measurement information and calculates the distance between the two points as the size of the object ob. As an example, steps for calculating the size of the object ob illustrated in FIG. 5 will now be described. Note that the object ob is a person. In addition, for simplification, the coordinate in the X-axis direction, which is perpendicular to the plane in FIG. 5, is not taken into consideration, and the calculation steps will be described by limiting to a YZ plane extending along the plane in FIG. 5.

The calculation unit 145 of the control unit 14 measures the distance from the origin O at which the radiation system 111 is located to a distance-measurement point P1 located at the head of the object ob and the distance from the origin O to a distance-measurement point P2 located at the feet of the object ob. The distance from the origin O to the distance-measurement point P1 will be denoted by d1. The distance from the origin O to the distance-measurement point P2 will be denoted by d2. The distances d1 and d2 will also be referred to as range information items. The origin O will also be referred to as a reference position. The distance-measurement points P1 and P2 will also be referred to as a first point and a second point, respectively. The distance-measurement points P1 and P2 will also be referred to as a first distance-measurement point and a second distance-measurement point, respectively. The information that identifies the distance-measurement point P1 and the information that identifies the distance-measurement point P2 will also be referred to as first distance-measurement information and second distance-measurement information, respectively.

Here, the radiation system 111 has a radiation axis 111A included in an area in which a radiated electromagnetic wave can scan. In the present embodiment, the radiation axis 111A corresponds to the central axis of the area in which a radiated electromagnetic wave can scan. An XYZ coordinate system is set such that the Z-axis coincides with the radiation axis 111A. Accordingly, the radiation axis 111A is included in the YZ plane.

The length measurement calculation unit 147 receives a distance to the distance-measurement point P1 and a distance to the distance-measurement point P2 from the calculation unit 145. The length measurement calculation unit 147 further receives, from the calculation unit 145 or the radiation system 111, an angle ($\theta1$) formed by a line segment connecting the origin O and the distance-measurement point P1 and the radiation axis 111A. The angle $\theta1$ determines a direction from the origin O to the distance-measurement point P1 in the YZ plane. In other words, it can be said that the angle $\theta1$ is information relating to a direction. The angle $\theta1$ will also be referred to as angle information relating to the direction toward the distance-measurement point P1. The angle $\theta1$ may be acquired on the basis of direction information received from the deflection unit 13. The length measurement calculation unit 147 can calculate the Y-coordinate (Y1) and the Z-coordinate (Z1) of the distance-measurement point P1 on the basis of the distance d1 and the angle $\theta1$ as expressed by Equations (1) and (2) given below.

[Math. 1]

$$Y_1 = d_1 \sin \theta_1 \quad \text{... (1)}$$

[Math. 2]

$$Z_1 = d_1 \cos \theta_1 \quad \text{... (2)}$$

In addition, the length measurement calculation unit 147 receives, from the calculation unit 145 or the radiation system 111, an angle ($\theta2$) formed by a line segment connecting the origin O and the distance-measurement point P2 and the radiation axis 111A. Similar to the case of the distance-measurement point P1, the length measurement calculation unit 147 can calculate the Y-coordinate (Y2) and the Z-coordinate (Z2) of the distance-measurement point P2 on the basis of the distance d2 and the angle $\theta2$. The coordinates of the first point and the coordinates of the second point will also be referred to as first space coordinates and second space coordinates, respectively.

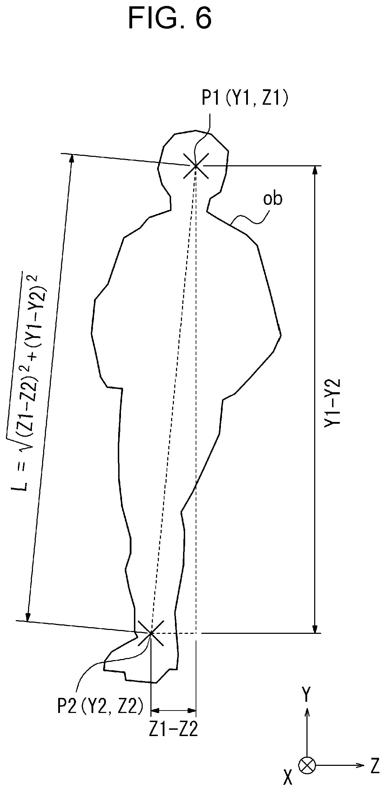

Here, the size of the object ob is represented as the length from the head to the feet. In other words, the length measurement calculation unit 147 can calculate the length of the object ob as the length of a line segment P1P2. The line segment P1P2 included in the object ob illustrated as an example in FIG. 6 intersects the XY plane, that is, an imaging surface. The length measurement calculation unit 147 can calculate a length L of the line segment P1P2 by applying the coordinates of the distance-measurement point P1 and the coordinates of the distance-measurement point P2 to Equation (3) based on the Pythagorean theorem given below.

[Math. 3]

$$L = \sqrt{(Z1 - Z2)^2 + (Y1 - Y2)^2} \quad \text{... (3)}$$

In the case where the electromagnetic-wave detection apparatus 10 calculates the size of the object ob only on the basis of a captured image of the object ob, the calculated size may be different from the actual size of the object ob for the following reasons.

In the case where the electromagnetic-wave detection apparatus 10 is located on the Z-axis, the electromagnetic-wave detection apparatus 10 captures an image of the object ob from the positive Z-axis direction. Thus, an imaging surface of an image captured by the electromagnetic-wave detection apparatus 10 is a surface perpendicular to the Z-axis, that is, a surface parallel to the XY plane. In the case where the line segment P1P2 included in the object ob intersects the imaging surface, the line segment P1P2 appears in the image as an orthogonal projection to the imaging surface. In the case of ignoring spread in the X-axis direction (the depth direction in FIG. 6), the line segment appears in the image as an orthogonal projection to the Y-axis. The length of the orthogonal projection of the line segment is shorter than the actual length of the line segment. More specifically, the length of the orthogonal projection of the line segment P1P2, which is illustrated as an example in FIG. 6, on the Y-axis is Y1-Y2, which is shorter than the length L calculated by using Equation (3). Thus, the size of the object ob calculated as the length of the line segment P1P2 on the basis of the image may be different from the actual size of the object ob.

In addition, even if the line segment P1P2 is parallel to the imaging surface, the length of the line segment that appears in the image changes depending on the distance from the electromagnetic-wave detection apparatus 10 to the object ob. Thus, it may sometimes be difficult to calculate the actual length of the line segment P1P2 only on the basis of the image.

As described above, according to the present embodiment, the electromagnetic-wave detection apparatus 10 calculates the coordinates of the distance-measurement points P1 and P2 included in the object ob. In addition, the electromagnetic-wave detection apparatus 10 can calculate the length of the line segment P1P2 as the size of the object ob on the basis of the coordinates of the distance-measurement points P1 and P2. The accuracy with which the size of the object ob is calculated on the basis of a result of distance measurement may be higher than the accuracy with which the size of the object ob is calculated only on the basis of an image.

(Improvement in Accuracy by Correction of Coordinates)

As described above, the resolution of distance-measurement information regarding a distance to the object ob is lower than the resolution of an image of the object ob. When the resolution of distance-measurement information is low, the deviation of the positions of the distance-measurement points P1 and P2 from an outline portion of the object ob is large, and accordingly, there may also be a large error in calculation of the size of the object ob based on the distance-measurement information. Thus, the length measurement calculation unit 147 can further improve the accuracy with which the object ob is calculated by correcting the coordinates that are used for calculating the size of the object ob on the basis of a captured image of the object ob.

For example, as illustrated in FIG. 5, the end point on the head side of the object ob that is used for calculating the size of the object ob is corrected from P1 to P1'. In addition, the end point on the feet side of the object ob that is used for calculating the size of the object ob is corrected from P2 to P2'. As the distance between P1 and P1' increases, or as the distance between P2 and P2' increases, the accuracy of size calculation is more greatly improved by correction. In the outline portion of the object ob in a captured image, the position that is closest to the position of the distance-measurement point P1 may be P1', and the position that is closest to the position of the distance-measurement point P2 may be P2'. The points P1' and P2' may be arbitrarily specified by an operation unit (not illustrated) from the captured image of the object ob. The points P1' and P2' are not limited to being included in the outline portion of the object ob in the captured image and may be points defining the distance between portions of the object ob that are desired to be subjected to distance measurement.

Specifically, the correction from P1 to P1' may be performed in the following manner. The length measurement calculation unit 147 generates a range image in which distance-measurement information regarding a distance to the object ob is mapped. The length measurement calculation unit 147 acquires a captured image of the object ob. The length measurement calculation unit 147 detects the outline portion of the object ob from the captured image. The length measurement calculation unit 147 acquires, from the outline portion, the head-side end point P1' that corresponds to the distance-measurement point P1 and that is located on the same XY plane as the distance-measurement point P1. Then, the length measurement calculation unit 147 calculates an angle $\theta1'$ formed by the line segment connecting the origin O and the end point P1' and the radiation axis 111A from the positional relationship between the distance-measurement point P1 and the end point P1' in the captured image. The angle $\theta1'$ may be calculated by superimposing the range image and the captured image. For example, the length measurement calculation unit 147 can calculate the angle $\theta1'$ based on the premise that an angle that corresponds to a point whose Y-coordinate is zero in the captured image is zero degree and on the basis of the ratio of the Y-coordinate of the distance-measurement point P1 to the Y-coordinate of the end point P1' and on the basis of the fact that the angle formed by the line segment connecting the origin O and the distance-measurement point P1 and radiation axis 111A is $\theta1$.

The length measurement calculation unit 147 calculates, by using Equation (4) given below, a length d1' of the line segment connecting the origin O and the end point P1' on the basis of the Z-coordinate of the distance-measurement point P1 that is denoted by Z1 and the angle $\theta1'$.
[Math. 4]

$$d'_1 = \frac{Z_1}{\cos\theta'_1} \ \text{... (4)}$$

In addition, the length measurement calculation unit 147 calculates, by using Equation (5) given below, the Y-coordinate Y1' of the end point P1' on the basis of the length d1'.
[Math. 5]

$$Y'_1 = d'_1 \sin\theta'_1 \ \text{... (5)}$$

The Z-coordinate of the end point P1' is considered to be the same as Z1, which is the Z-coordinate of the distance-measurement point P1. Accordingly, the coordinates of the end point P1' is determined. As a result, the correction from P1 to P1' is performed. Note that the correction from P2 to P2' may be performed in a manner the same as, and/or similar to, the correction from P1 to P1'. The end point P1' and the end point P2' will also be referred to as a first end point and a second end point, respectively. The coordinates of the first end point will also be referred to as first-end-point coordinates, and the coordinates of the second end point will also be referred to as second-end-point coordinates. As mentioned above, the length measurement calculation unit 147 considers the Z-coordinate of the first end point to be the same as the Z-coordinate of the first point. In other words, when viewed from the origin O at which the radiation system 111 is located, the position of the first point and the position of the first end point are the same in the depth direction of a space.

The length measurement calculation unit 147 can calculate, on the basis of Equation (6) given below, the length of a line segment P1'P2', which is the distance between two points represented by the coordinates of P1' and P2' after the corrections, as the size of the object ob.

[Math. 6]

$$L = \sqrt{(Z1 - Z2)^2 + (Y1' - Y2')^2} \quad \dots (6)$$

As described above, the length measurement calculation unit 147 can correct, on the basis of a captured image, the coordinates of two end points used for calculating the length of a line segment. This improves the accuracy with which the size of the object ob is calculated.

In addition, as described above, the electromagnetic-wave detection apparatus 10 can cause the optical axis of a reflected wave used for generating a range image to coincide with the optical axis of a captured image. Thus, the length measurement calculation unit 147 can eliminate positional errors that occur when a range image and a captured image are superimposed with each other or reduce such positional errors close to zero. A range image and a captured image can be superimposed with each other with high accuracy, so that the length measurement calculation unit 147 can correct the coordinates of end points of the object ob with high accuracy by combining information items regarding an angle and a distance included in the range image and information included in the captured image. This improves the accuracy with which the size of the object ob is calculated.

(Size Calculation Considering Spread in X-Axis Direction)

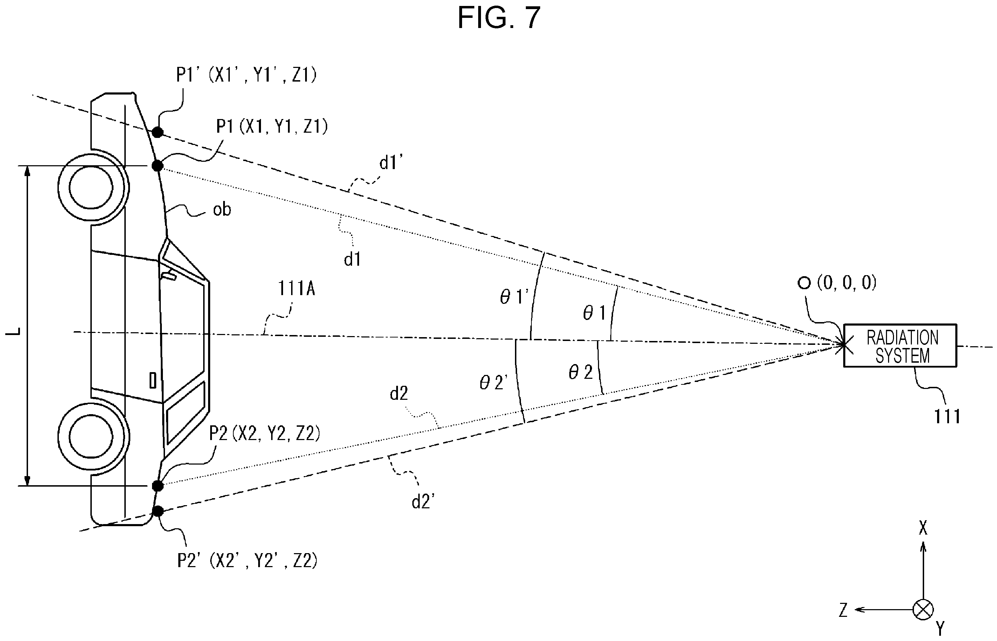

The size calculation method in the case of not taking into consideration spread in the X-axis direction (the depth direction in FIG. 5 and FIG. 6) has been described above with reference to FIG. 5 and FIG. 6. A size calculation method in the case of taking the spread in the X-axis direction into consideration will now be described with reference to FIG. 7, FIG. 8, and FIG. 9. The object ob illustrated as an example in FIG. 7, FIG. 8, and FIG. 9 is a vehicle. The length measurement calculation unit 147 measures the entire length (the longitudinal length) of the vehicle.

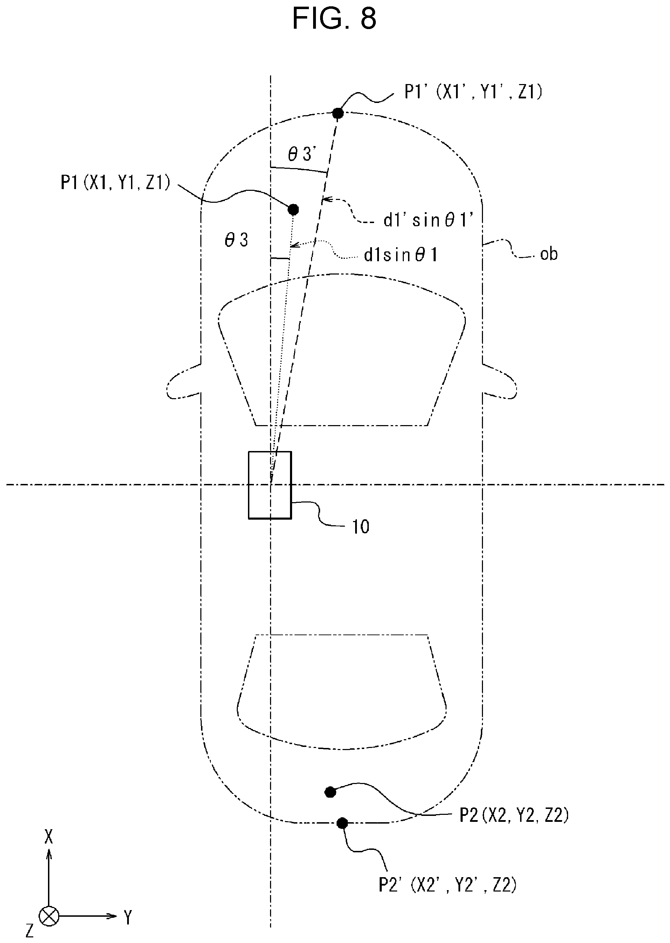

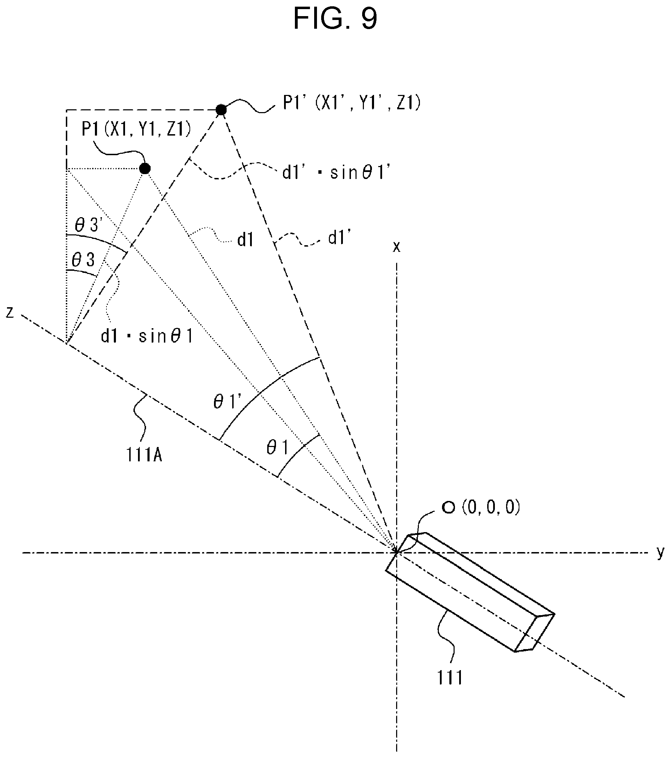

As illustrated in FIG. 7, the length measurement calculation unit 147 acquires the distance-measurement information of the distance-measurement point P1 corresponding to a front end portion of the vehicle, which is the object ob, and the distance-measurement information of the distance-measurement point P2 corresponding to a rear end portion of the vehicle. The distance from the origin O, at which the radiation system 111 is located, to the distance-measurement point P1 and the distance from the origin O to the distance-measurement point P2 are denoted by d1 and d2, respectively. The angle formed by a line segment OP1 and the radiation axis 111A and the angle formed by a line segment OP2 and the radiation axis 111A are denoted by θ1 and θ2, respectively. When the X-coordinates of the distance-measurement points P1 and P2 are not zero, the line segments OP1 and OP2 are included in a plane that intersects the YZ plane. More specifically, as illustrated in FIG. 8 and FIG. 9, the line segment OP1 is located in a plane rotated with respect to the YZ plane by an angle denoted by θ3. As illustrated in FIG. 9, the degree of θ1 is determined in the plane rotated with respect to the YZ plane by the angle θ3.

Unlike the case illustrated in FIG. 5 and FIG. 6, the length measurement calculation unit 147 can calculate, by using Equations (7) to (9) given below, the coordinates (X1, Y1, Z1) of the distance-measurement point P1 in the case of also taking the X-coordinate into consideration.

$$Z1 = d1 \cdot \cos\theta1 \quad \dots (7)$$

$$X1 = d1 \cdot \sin\theta1 \cdot \cos\theta3 \quad \dots (8)$$

$$Y1 = d1 \cdot \sin\theta1 \cdot \sin\theta3 \quad \dots (9)$$

Note that the angle θ1 may be acquired on the basis of direction information received from the deflection unit 13, and the angle θ3 may be acquired on the basis of the position of the distance-measurement point P1 in the captured image or a distance-measurement image.

The length measurement calculation unit 147 can calculate the coordinates of the distance-measurement point P2 in a manner the same as, and/or similar to, the calculation of the coordinates of the distance-measurement point P1. In addition, the length measurement calculation unit 147 can calculate the length L of the line segment P1P2 as the size of the object ob (the entire length of the vehicle) by applying the coordinates of P1 and the coordinates of P2 to Equation (10) based on the Pythagorean theorem given below.

[Math. 7]

$$L = \sqrt{(X1 - X2)^2 + (Y1 - Y2)^2 + (Z1 - Z2)^2} \quad \dots (10)$$

In addition, the length measurement calculation unit 147 can correct, on the basis of the captured image of the object ob, the coordinates used for calculating the size of the object ob (the entire length of the vehicle). For example, the length measurement calculation unit 147 can correct the coordinates of the front end portion of the vehicle in the following manner.

The length measurement calculation unit 147 generates a range image in which distance-measurement information regarding a distance to the object ob is mapped. The length measurement calculation unit 147 acquires a captured image of the object ob. The length measurement calculation unit 147 detects the front end point P1' of the object ob located on the same XY plane as P1 on the basis of the captured image and calculates the angle $\theta1'$ formed by the line segment connecting the origin O and the end point P1' and the radiation axis 111A from the positional relationship between the distance-measurement point P1 and the end point P1' in the captured image. For example, the length measurement calculation unit 147 considers an angle corresponding to a point in the captured image whose X-coordinate and Y-coordinate are both zero to be zero degrees. Then, the length measurement calculation unit 147 can calculate the angle $\theta1'$ at the end point P1' in the captured image on the basis of the ratio of the distance from the origin (0, 0) of the XY plane to the distance-measurement point P1 (X1, Y1) to the distance from the origin (0, 0) of the XY plane to the end point P1' and on the basis of the fact that the angle of the distance-measurement point P1 is $\theta1$.

The length measurement calculation unit 147 calculates, by using Equation (11) given below, the length d1' of the line segment connecting the origin O and the end point P1' on the basis of the Z-coordinate of the distance-measurement point P1, which is denoted by Z1, and the angle $\theta1'$.
[Math. 8]

$$d_1' = \frac{Z_1}{\cos \theta_1'} \quad \dots (11)$$

In addition, the length measurement calculation unit 147 calculates, by using Equations (12) and (13) given below, the X-coordinate X1' and the Y-coordinate Y1' of the end point P1' on the basis of the length d1'.

$$Y1' = d1' \cdot \sin\theta1' \cdot \sin\theta3' \quad \dots (12)$$

$$X1' = d1' \cdot \sin\theta1' \cdot \cos\theta3' \quad \dots (13)$$

The Z-coordinate of the end point P1' is considered to be the same as Z1, which is the Z-coordinate of the distance-measurement point P1. Accordingly, the coordinates of the end point P1' is determined. As a result, the correction from P1 to P1' is performed. Note that the correction from P2 to P2' may be performed in a manner same as, and/or similar to, the correction from P1 to P1'.

The length measurement calculation unit 147 can calculate, on the basis of Equation (14) given below, the length of the line segment P1'P2', which is the distance between two points represented by the coordinates of P1' and P2' after the corrections, as the size of the object ob.
[Math. 9]

$$L = \sqrt{(X1' - X2')^2 + (Y1' - Y2')^2 + (Z1 - Z2)^2} \quad \dots (14)$$

As described above, even in the case of taking spread in the X-axis direction into consideration, the length measurement calculation unit 147 can correct, on the basis of a captured image, the coordinates of two end points used for calculating the length of a line segment. This improves the accuracy with which the size of the object ob is calculated.

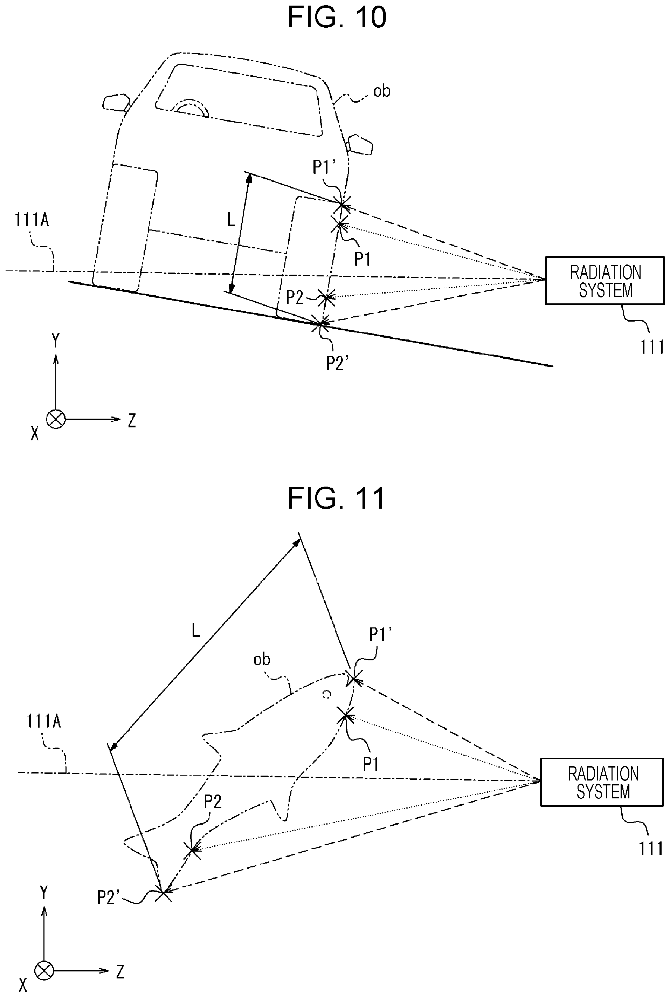

As illustrated in FIG. 10, the length measurement calculation unit 147 may calculate not only the entire size of the object ob but also the size of a portion of an object included in a captured image. As an example, the length measurement calculation unit 147 can detect a tire portion of a large-size vehicle as the object ob in a captured image and measure the diameter of the tire portion. According to the present embodiment, even in the case where an imaging surface of an image captured by the electromagnetic-wave detection apparatus 10 is tilted with respect to the tire, the accuracy with which the diameter of the tire is measured may be improved. The length measurement calculation unit 147 may measure various other items as the objects ob.

The control unit 14 can determine a portion whose size needs to be measured (e.g., a tire portion or the like) by analyzing image information acquired by the image-information acquisition unit 141. As described above, the radiation control unit 143 controls the radiation system 111 and measures the distances to the distance-measurement points P1 and P2 of an object whose size is to be measured, and the length measurement calculation unit 147 calculates the length of the line segment P1P2, so that the size of the object can be measured.

For example, there is a possibility that wear and tear on a tire of a large-size vehicle may become a hindrance to the work using the large-size vehicle. The electromagnetic-wave detection apparatus 10 can find a vehicle part that needs to be repaired or replaced by continuously measuring the size of a tire or the like and can indicate a need for maintenance. The electromagnetic-wave detection apparatus 10 may periodically measure the sizes of tires or the like of multiple vehicles and may store each of the measured sizes into a storage unit in association with unique information (identification information such as ID) of a vehicle identified by using image information acquired by the image-information acquisition unit 141.

As illustrated in FIG. 11, the length measurement calculation unit 147 can detect livestock, such as a fish, as the object ob and measure the entire length of the livestock. According to the present embodiment, even in the case where an imaging surface of an image captured by the electromagnetic-wave detection apparatus 10 is tilted with respect to a fish, which is the object ob, the accuracy with which the entire length of the fish is measured may be improved. The length measurement calculation unit 147 may measure not only a fish but also various other animals such as a cow and a horse as the objects ob.

Since livestock are living creatures, they can take various postures. The electromagnetic-wave detection apparatus 10 may measure the size of livestock to be measured at the timing at which the electromagnetic-wave detection apparatus 10 detects, from image information acquired by the image-information acquisition unit 141, that the livestock has taken a predetermined posture.

Measuring the size of livestock is meaningful in terms of growth management of the livestock. Continuously measuring the size of livestock by using the electromagnetic-wave detection apparatus 10 can facilitate growth management. Information regarding a measured size of livestock may be stored into a storage unit in association with unique information of the livestock identified by using image information acquired by the image-information acquisition unit 141, so that growth management of multiple livestock may be performed.

(Example of Flowchart)

<Size Calculation Using Coordinates of Distance-Measurement Points as End Points>

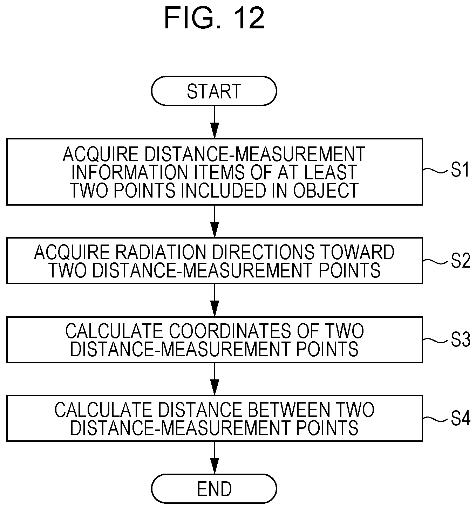

The length measurement calculation unit 147 may employ a size measurement method including the steps of the flowchart illustrated as an example in FIG. 12. The size measurement method may be implemented as a size measurement program that is executed by a processor included in the length measurement calculation unit 147. The size measurement program may be stored in a non-transitory computer-readable medium.

The length measurement calculation unit 147 acquires distance-measurement information items of at least two points included in the object ob (step S1). More specifically, in order to measure the size of the object ob, the length measurement calculation unit 147 selects the distance-measurement points P1 and P2 as two points that correspond to the two ends of the object ob and acquires the distance-measurement information items of these distance-measurement points. The length measurement calculation unit 147 acquires the distance from the origin O to the distance-measurement point P1 and the distance from the origin O to the distance-measurement point P2 as the distance-measurement information items.

The length measurement calculation unit 147 acquires radiation directions toward the two distance-measurement points (step S2). More specifically, the length measurement calculation unit 147 receives, from the radiation system 111, the direction in which the radiation system 111 radiates an electromagnetic wave onto the distance-measurement point P1 and the direction in which the radiation system 111 radiates an electromagnetic wave onto the distance-measurement point P2.

The length measurement calculation unit 147 calculates the coordinates of each of the two distance-measurement points (step S3). The length measurement calculation unit 147 can calculate the coordinates of each of the distance-measurement points on the basis of the corresponding distance and the corresponding direction.

The length measurement calculation unit 147 calculates the length between the two distance-measurement points (step S4). After step S4 has been performed, the length measurement calculation unit 147 terminates the process illustrated by the flowchart in FIG. 12.

<Size Calculation Using End Points Corrected based on Captured Image>

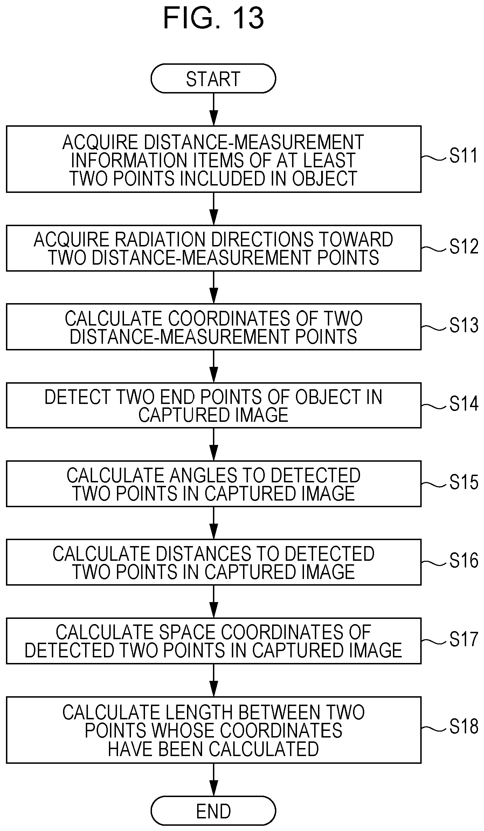

The length measurement calculation unit 147 may employ a size measurement method including the steps of the flowchart illustrated as an example in FIG. 13.

The length measurement calculation unit 147 acquires distance-measurement information items of at least two points included in the object ob (step S11). More specifically, in order to measure the size of the object ob, the length measurement calculation unit 147 selects the distance-measurement points P1 and P2 as two points that correspond to the two ends of the object ob and acquires the distance-measurement information items of these distance-measurement points. The length measurement calculation unit 147 acquires the distance from the origin O to the distance-measurement point P1 and the distance from the origin O to the distance-measurement point P2 as the distance-measurement information items.

The length measurement calculation unit 147 acquires radiation directions toward the two distance-measurement points (step S12). More specifically, the length measurement calculation unit 147 receives, from the radiation system 111, the direction in which the radiation system 111 radiates an electromagnetic wave onto the distance-measurement point P1 and the direction in which the radiation system 111 radiates an electromagnetic wave onto the distance-measurement point P2.

The length measurement calculation unit 147 calculates the coordinates of each of the two distance-measurement points (step S13). The length measurement calculation unit 147 can calculate the coordinates of each of the distance-measurement points on the basis of the corresponding distance and the corresponding direction.

The length measurement calculation unit 147 detects two end points (P1', P2') used for measuring the size of the object ob in the captured image (step S14). More specifically, the length measurement calculation unit 147 presumes that each point of the object ob is located on an imaging surface extending along the XY plane and detects the two end points on the imaging surface.

The length measurement calculation unit 147 calculates angles to the detected two end points in the captured image (step S15). More specifically, the length measurement calculation unit 147 can calculate the angles to the two end points on the basis of the distance-measurement information items, the X-coordinates or the Y-coordinates of the distance-measurement points, at which the distance-measurement information items have been acquired, in a distance-measurement image, and the X-coordinates or the Y-coordinates of each point in the captured image.

The length measurement calculation unit 147 calculates distances to the detected two end points in the captured image (step S16). More specifically, the length measurement calculation unit 147 calculates the distance to each of the points on the basis of an angle to the point and the Z-coordinate of a distance-measurement point that is close to the point.

The length measurement calculation unit 147 calculates the space coordinates of the detected two end points in the captured image (step S17). More specifically, the length measurement calculation unit 147 calculates the space coordinates (the X-coordinate, the Y-coordinate, and the Z-coordinate) of each of the points on the basis of the distance to the point and the angle to the point.

The length measurement calculation unit 147 calculates the length between the two points whose coordinates have been calculated (step S18). After step S18 has been performed, the length measurement calculation unit 147 terminates the process illustrated by the flowchart in FIG. 13.

(Other Embodiments)

The length measurement calculation unit 147 can also calculate the length of the object ob along the direction in which the radiation axis 111A, along which the radiation system 111 radiates an electromagnetic wave, extends. For example, the length measurement calculation unit 147 can detect a vehicle, which is located on a road surface, as the object ob and measure the height of the vehicle by radiating an electromagnetic wave from the top surface side of the vehicle.

More specifically, the length measurement calculation unit 147 acquires a captured image including the vehicle, which is the object ob, and the road surface on which the vehicle is located. The length measurement calculation unit 147 detects a point located in a region that is presumed to be the road surface and acquires distance-measurement information. The length measurement calculation unit 147 calculates the coordinates of at least two points located in the region, which is presumed to be the road surface, on the basis of the distance-measurement information. The length measurement calculation unit 147 calculates the inclination of the road surface and the position of a portion of the road surface located below the vehicle on the basis of the coordinates of the road surface. The length measurement calculation unit 147 acquires the distance-measurement information of a point located at the top surface of the vehicle and can calculate the height of the vehicle on the basis of the calculation results regarding the inclination of the road surface and the position of the portion of the road surface.

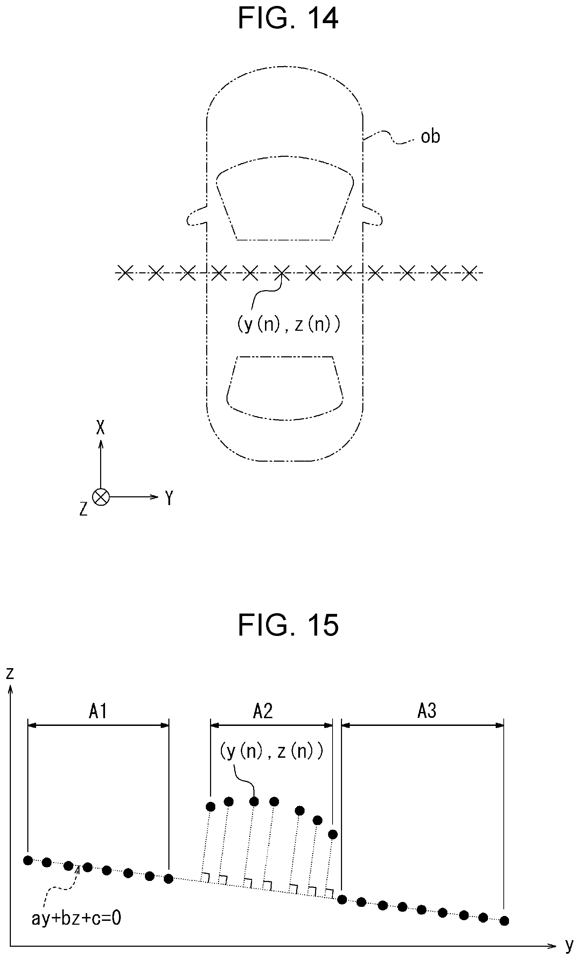

For example, as illustrated in FIG. 14, the length measurement calculation unit 147 may acquire distance-measurement information items of multiple points located on a straight line that passes through the road surface, on which the vehicle is located, and the vehicle when the road surface is viewed in plan view. The points, at which the distance-measurement information items are acquired, are aligned along the Y-axis and specified by the Y-coordinates. In addition, the distance-measurement information item of each of the points is expressed as (y(n), z(n)) by being associated with the Z-coordinate of the point. Here, n is a parameter for identifying each point and is a natural number.

As illustrated in FIG. 15, the distance-measurement information items are plotted in the YZ plane. The length measurement calculation unit 147 may estimate the region of the road surface on the basis of the graph in which the distance-measurement information items are plotted. In FIG. 15, the region of the road surface is presumed to be the regions denoted by A1 and A3. For example, the length measurement calculation unit 147 can identify information of the road surface by calculating, on the basis of the distance-measurement information of at least one point that is included in the region A1 and the distance-measurement information of at least one point that is included in the region A3, the coefficients a, b and c of ay + bz + c = 0, which is an equation representing the road surface. The road surface will also be referred to as a reference surface. The information that identifies the road surface, which serves as the reference surface, corresponds to the first distance-measurement information.

The length measurement calculation unit 147 can presume that the region that is denoted by A2 in FIG. 15 and that is not used in the equation representing the road surface is the region of the top surface of the vehicle. The length measurement calculation unit 147 can calculate the distance from the road surface to each point at the top surface of the vehicle on the basis of the coordinates of each point at the top surface of the vehicle and the equation representing the road surface. The length measurement calculation unit 147 may calculate the maximum value among calculated distances as the height of the vehicle. The length measurement calculation unit 147 may calculate the height of the vehicle on the basis of, for example, Equation (15) given below.

[Math. 10]

$$H = Max_n \frac{|ay(n) + bz(n) + c|}{\sqrt{a^2 + b^2}}$$

$$\ldots (15)$$

In Equation (15), Maxn is a function for selecting the maximum value. Equation (15) implies that, among the distances from the coordinates of the points to a straight line representing the road surface in the YZ plane, the maximum value is selected.

It can be said that the length measurement calculation unit 147 determines one of the end points that is farther from the road surface, which serves as the reference surface, than the other end point, determines the space coordinates of the determined end point, and calculates the height of the vehicle on the basis of the space coordinates of the determined end point and the equation representing the road surface serving as the reference surface. The information that identifies the end point farther from the road surface serving as the reference surface corresponds to the second distance-measurement information.

The length measurement calculation unit 147 may acquire an image of the vehicle, which is the object ob, captured from a direction in which the road surface is viewed in plan view and distinguish the region of the road surface and the region of the vehicle from each other on the basis of the image. This facilitates calculation of the equation representing the road surface.

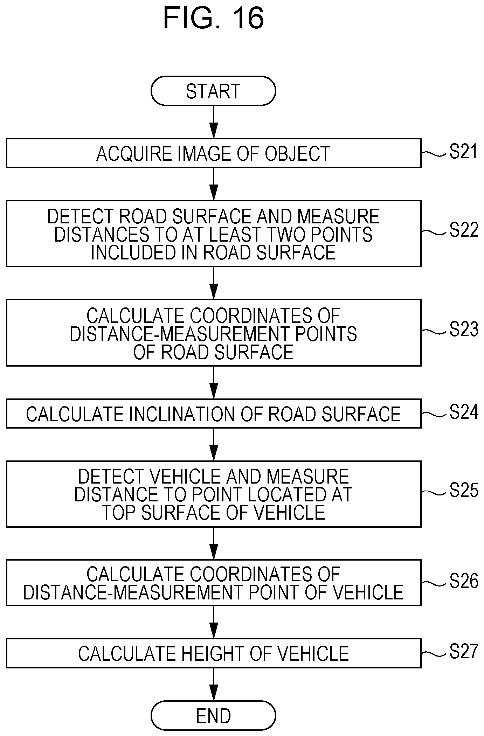

The length measurement calculation unit 147 may employ a size measurement method including the steps of the flowchart illustrated as an example in FIG. 16. The size measurement method may be implemented as a size measurement program that is executed by a processor included in the length measurement calculation unit 147. The size measurement program may be stored in a non-transitory computer-readable medium.

The length measurement calculation unit 147 acquires an image of the object ob (step S21). More specifically, the length measurement calculation unit 147 may acquire an image of the vehicle captured from the direction in which the road surface is viewed in plan view.

The length measurement calculation unit 147 detects the road surface from the image of the object ob and measures distances to at least two points included in the road surface (step S22). The points that are included in the road surface and that are subjected to the distance measurement will also be referred to as distance-measurement points of the road surface.

The length measurement calculation unit 147 calculates the coordinates of the distance-measurement points of the road surface (step S23). Since the distances to the at least two points have been measured in step S22, the length measurement calculation unit 147 can calculate the coordinates of the at least two distance-measurement points.

The length measurement calculation unit 147 calculates the inclination of the road surface (step S24). More specifically, as mentioned above, the length measurement calculation unit 147 may calculate the coefficients a, b and c of ay + bz + c = 0, which is the equation representing the road surface. The inclination of the road surface corresponds to the ratio of a to b.

The length measurement calculation unit 147 detects the vehicle from the image of the object ob and measures a distance to a point located at the top surface of the vehicle (step S25). The point that is located at the top surface of the vehicle and that is subjected to the distance measurement will also be referred to as a distance-measurement point of the vehicle.

The length measurement calculation unit 147 calculates the coordinates of the distance-measurement point of the vehicle (step S26).

The length measurement calculation unit 147 calculates the height of the vehicle (step S27). More specifically, the length measurement calculation unit 147 can calculate the distance from the distance-measurement point of the vehicle to the line representing the road surface as the height of the vehicle. After step S27 has been performed, the length measurement calculation unit 147 terminates the process illustrated by the flowchart in FIG. 16.

(Variations)

Although the present disclosure has been described with reference to the drawings and on the basis of the embodiments, it is to be noted that variations and various changes can be easily made by those skilled in the art on the basis of the present disclosure. Therefore, it is to be noted that such variations and changes are included in the scope of the present disclosure.

In the above-described embodiments, the electromagnetic-wave detection apparatus 10 employs the Direct ToF method for directly measuring the period from when a laser beam is radiated until the laser beam returns and generates distance-measurement information. However, the electromagnetic-wave detection apparatus 10 is not limited to having such a configuration. For example, the electromagnetic-wave detection apparatus 10 may employ the Flash ToF method, in which an electromagnetic wave is radiated radially (i.e., radiated in multiple directions simultaneously) at regular intervals and in which the period from when the electromagnetic wave is radiated until the electromagnetic wave returns is indirectly measured by using the phase difference between the radiated electromagnetic wave and the returned electromagnetic wave, and generate distance-measurement information. Alternatively, the electromagnetic-wave detection apparatus 10 may employ another ToF method such as, for example, the phased ToF method and generate distance-measurement information.

In the above-described embodiments, although the switching unit 18 can switch the travelling direction of an electromagnetic wave that is incident on the action surface as between two directions, the switching unit 18 may switch the travelling direction of an electromagnetic wave between three or more directions instead of two directions.

In the above-described embodiment, in the switching unit 18, the first state is the first reflection state in which an electromagnetic wave that is incident on the action surface as is reflected in the third direction d3, and the second state is the second reflection state in which an electromagnetic wave that is incident on the action surface as is reflected in the fourth direction d4. However, each of these states may be another state.

For example, the first state may be a transmission state in which an electromagnetic wave that is incident on the action surface as is allowed to pass through the action surface as so as to travel in the third direction d3. More specifically, switching elements included in a switching unit 181 that is an alternative to the above-described switching unit 18 and that has a configuration different from that of the switching unit 18 may each include a shutter having a reflective surface at which an electromagnetic wave is reflected in the fourth direction d4. In the switching unit 181 having such a configuration, the state of each of the switching elements may be switched between the transmission state, which is the first state, and the reflection state, which is the second state, by opening and closing the shutter of the switching element.

An example of the switching unit 181 having such a configuration may be a switching unit that includes a MEMS shutter in which multiple shutters that are openable and closable are arranged in an array. Another example of the switching unit 181 may be a switching unit that includes a liquid crystal shutter whose state can be switched, in accordance with a liquid-crystal molecular orientation, between a reflection state in which an electromagnetic wave is reflected and a transmission state in which an electromagnetic wave is allowed to pass therethrough. In the switching unit 181 having such a configuration, the state of each of the switching elements may be switched between the transmission state, which is the first state, and the reflection state, which is the second state, by switching the liquid-crystal molecular orientation of the switching element.

In the electromagnetic-wave detection apparatus 10, the light reception system 110 may further include a second subsequent-stage optical system and a third detection unit. The second subsequent-stage optical system is disposed in the fourth direction d4 from the switching unit 18 and forms an image of the object ob. The third detection unit is disposed on a path of an electromagnetic wave that is caused to travel in the fourth direction d4 by the switching unit 18 and then to further travel by passing through the second subsequent-stage optical system and detects an electromagnetic wave that has travelled in the fourth direction d4.

In the above-described embodiments, the electromagnetic-wave detection apparatus 10 has a configuration in which the second detection unit 17 is a passive sensor and in which the first detection unit 20 is an active sensor. However, the electromagnetic-wave detection apparatus 10 is not limited to having such a configuration. For example, in the electromagnetic-wave detection apparatus 10, advantageous effects the same as, and/or similar to, that of the above-described embodiments can be obtained both in the case where the second detection unit 17 and the first detection unit 20 are active sensors and in the case where the second detection unit 17 and the first detection unit 20 are passive sensors.

Some of the image-information acquisition unit 141, the reflection-intensity-information acquisition unit 142, the radiation control unit 143, the light-reception control unit 144, the calculation unit 145, and the correspondence-information calculation unit 146 are not necessarily included in the control unit 14 and may be provided separately from the control unit 14. For example, the calculation unit 145 may be provided as a control device that is independent of the control unit 14.

Each function of the image-information acquisition unit 141, the reflection-intensity-information acquisition unit 142, the correspondence-information calculation unit 146, or the like included in the control unit 14 is not necessarily included in the electromagnetic-wave detection apparatus 10 and may be provided as a different device.

In the above-described embodiments, two points (P1 and P2, P1' and P2') in order to measure the size of the object ob. The number of points used for measuring the size of the object ob is not limited to two and may be three or more. The size of the object ob may be measured by using three or more points, measuring the lengths between the points, and calculating the sum of the measured lengths. In the case where the exact length of the object ob cannot be measured by using a straight line extending between two points because the object ob has, for example, a curved shape, size measurement may be performed by setting three or more points along a portion of the object ob that is to be measured.

Although representative examples have been described in the above embodiments, it is obvious to those skilled in the art that many changes and substitutions can be made within the scope of the present disclosure. Thus, the present disclosure shall not be considered to be limited to the above-described embodiments, and variations and various changes can be made without departing from the scope of the claims. For example, some of the configuration blocks illustrated in the configuration diagrams of the embodiments can be combined into a single configuration block, or one of the configuration blocks may be divided into multiple configuration blocks.

Although the means for solving problems according to the present disclosure have been described above as apparatuses, the present disclosure can also be implemented as an aspect including them. The present disclosure can also be implemented as a method, a program, and a storage medium recording a program, which substantially correspond to them, although these are not claimed.

**Claims**

1. A measurement apparatus (10) comprising:

    a distance-measurement unit configured to acquire information relating to a distance to a first point (P1) and a distance to a second point (P2); and
    an image-capturing unit configured to acquire the image of a measurement target (ob),
    wherein the distance-measurement unit and the image-capturing unit share an optical axis,
    wherein a resolution of the distance-measurement unit is lower than a resolution of the image-capturing unit, the resolution of the distance-measurement unit referring to a resolution of information relating to the distance to the first point (P1) and the distance to the second point (P2) per frame in a planar direction and the resolution of the image-capturing unit referring to the resolution of the image, and
    wherein the information relating to the distance to the first point (P1) and the distance to the second point (P2) is acquired by receiving a reflected wave that is an electromagnetic wave radiated onto the first point (P1) and the second point (P2) by a radiation unit (12) and reflected by a target (ob),
    the measurement apparatus (10) being configured to:

      determine the first point (P1) and the second point (P2) that are two points in a space in which the measurement target (ob) is present and that are used in measurement of a size of the measurement target (ob);
      calculate first space coordinates indicating a position of the first point (P1) in the space and second space coordinates indicating a position of the second point (P2) in the space based on range information (d1, d2) relating to a distance from a reference position (O) to the first point (P1) and a distance from the reference position (O) to the second point (P2) and an emission direction of the electromagnetic wave that is radiated for acquiring the information relating to the distance to the first point (P1) and the distance to the second point (P2);
      determine, based on an image of the measurement target (ob), a first end point (P1') and a second end point (P2') that are two points with which the size of the measurement target (ob) is measured;

calculate first-end-point coordinates indicating a position of the first end point (P1') in the space and second-end-point coordinates indicating a position of the second end point (P2') in the space based on the first space coordinates and the second space coordinates; and

calculate a distance between the first end point (P1') and the second end point (P2') based on the first-end-point coordinates and the second-end-point coordinates.

2. The measurement apparatus (10) according to claim 1, configured to:

acquire angle information relating to a direction from the reference position (O) toward the first end point (P1') and a direction from the reference position (O) toward the second end point (P2') based on a positional relationship between the first point (P1) and the first end point (P1') and a positional relationship between the second point (P2) and the second end point (P2') in the image of the measurement target (ob); and

calculate the first-end-point coordinates and the second-end-point coordinates based on the angle information.

3. The measurement apparatus (10) according to claim 1 or 2,
further comprising a radiation system (111) having a radiation axis (111A) included in an area in which a radiated electromagnetic wave can scan, wherein positions of the first space coordinates are identical to positions of the first-end-point coordinates in a depth direction of the space, when viewed from the reference position (O) along the radiation axis (111A).

4. The measurement apparatus (10) according to any one of claims 1 to 3, further comprising a storage unit configured to:
store, in association with the distance between the first end point (P1') and the second end point (P2'), identification information identified based on the image of the measurement target (ob).

5. The measurement apparatus (10) according to any one of claims 1 to 4,
wherein the measurement target (ob) is a portion of an object present in the space.

6. The measurement apparatus (10) according to any one of claims 1 to 5, the measurement apparatus (10) further comprising:

a radiation unit (12) configured to radiate, at a predetermined radiation angle, an electromagnetic wave onto the first point (P1) that is a point in a space;

a first detection unit (20) configured to detect a reflected wave of the electromagnetic wave radiated by the radiation unit (12);

the distance-measurement unit being configured to measure, based on the reflected wave, the range information (d1, d2) that is a distance from the reference position (O) to the first point (P1);

a second detection unit (17) configured to acquire an image of the space by detecting an electromagnetic wave from the space; and

a control unit (144) configured to calculate coordinate information indicating a position of a point in the space, the point being included in the image, based on the range information (d1, d2), the radiation angle, and the position of the first point (P1) in the image,

wherein, among electromagnetic waves that are incident on the measurement apparatus (10) from the first point (P1), the reflected wave detected by the first detection unit (20) and the electromagnetic wave detected by the second detection unit (17) have an identical optical axis.

**Patentansprüche**

1. Messvorrichtung (10), aufweisend:

eine Entfernungsmesseinheit, die konfiguriert ist, um eine Information über eine Entfernung zu einem ersten Punkt (P1) und eine Entfernung zu einem zweiten Punkt (P2) zu erlangen, und

eine Bildaufnahmeeinheit, die konfiguriert ist, um das Bild eines Messziels (ob) zu erlangen,

wobei die Entfernungsmesseinheit und die Bildaufnahmeeinheit sich eine optische Achse teilen,

wobei eine Auflösung der Entfernungsmesseinheit niedriger als eine Auflösung der Bildaufnahmeeinheit ist, wobei sich die Auflösung der Entfernungsmesseinheit auf eine Auflösung einer Information bezieht, die sich auf die Entfernung zum ersten Punkt (P1) und die Entfernung zum zweiten Punkt (P2) pro Bild in einer planaren Richtung bezieht, und sich die Auflösung der Bildaufnahmeeinheit auf die Auflösung des Bildes bezieht, und

wobei die Information bezüglich der Entfernung zum ersten Punkt (P1) und der Entfernung zum zweiten Punkt (P2) durch Empfangen einer reflektierten Welle erlangt wird, die eine elektromagnetische Welle ist, die von einer Strahlungseinheit (12) auf den ersten Punkt (P1) und den zweiten Punkt (P2) ausgestrahlt und von einem Ziel (ob) reflektiert wird,

wobei die Messvorrichtung (10) konfiguriert ist, um:

den ersten Punkt (P1) und den zweiten Punkt (P2) zu ermitteln, die zwei Punkte in einem Raum sind, in dem sich das Messziel (ob) befindet, und die beim Messen einer Größe des Messziels (ob) verwendet werden, erste Raumkoordinaten, die eine Position des ersten Punktes (P1) im Raum angeben, und zweite Raumkoordinaten, die eine Position des zweiten Punktes (P2) im Raum angeben, basierend auf einer Entfernungsinformation (d1, d2), die sich auf eine Entfernung von einer Referenzposition (O) zum ersten Punkt (P1) und eine Entfernung von der Referenzposition (O) zum zweiten Punkt (P2) bezieht, sowie einer Emissionsrichtung der elektromagnetischen Welle zu berechnen, die zum Erlangen der Information bezüglich der Entfernung zum ersten Punkt (P1) und der Entfernung zum zweiten Punkt (P2) ausgestrahlt wird, basierend auf einem Bild des Messziels (ob) einen ersten Endpunkt (P1') und einen zweiten Endpunkt (P2') zu ermitteln, die zwei Punkte sind, mit denen die Größe des Messziels (ob) gemessen wird, erster-Endpunkt-Koordinaten, die eine Position des ersten Endpunkts (P1') im Raum angeben, und zweiter-Endpunkt-Koordinaten, die eine Position des zweiten Endpunkts (P2') im Raum angeben, basierend auf den ersten Raumkoordinaten und den zweiten Raumkoordinaten zu berechnen, und eine Entfernung zwischen dem ersten Endpunkt (P1') und dem zweiten Endpunkt (P2') basierend auf den erster-Endpunkt-Koordinaten und den zweiter-Endpunkt-Koordinaten zu berechnen.

2. Messvorrichtung (10) gemäß Anspruch 1, konfiguriert, um:

eine Winkelinformation zu erlangen, die sich auf eine Richtung von der Referenzposition (O) in Richtung zum ersten Endpunkt (P1') und eine Richtung von der Referenzposition (O) in Richtung zum zweiten Endpunkt (P2) bezieht, basierend auf einer Positionsbeziehung zwischen dem ersten Punkt (P1) und dem ersten Endpunkt (P1') und einer Positionsbeziehung zwischen dem zweiten Punkt (P2) und dem zweiten Endpunkt (P2') im Bild des Messziels (ob), und die erster-Endpunkt-Koordinaten und die zweiter-Endpunkt-Koordinaten basierend auf der Winkelinformation zu berechnen.

3. Messvorrichtung (10) gemäß Anspruch 1 oder 2, ferner aufweisend ein Strahlungssystem (111) mit einer Strahlungsachse (111A), die in einem Bereich enthalten ist, in dem eine ausgestrahlte elektromagnetische Welle abtasten kann, wobei Positionen der ersten Raumkoordinaten mit Positionen der erster-Endpunkt-Koordinaten in einer Tiefenrichtung des Raums identisch sind, bei einer Betrachtung von der Referenzposition (O) aus entlang der Strahlungsachse (111A).

4. Messvorrichtung (10) gemäß irgendeinem der Ansprüche 1 bis 3, ferner aufweisend eine Speichereinheit, die konfiguriert ist, um: in Verbindung mit der Entfernung zwischen dem ersten Endpunkt (P1') und dem zweiten Endpunkt (P2') eine Identifizierungsinformation zu speichern, die basierend auf dem Bild des Messziels (ob) identifiziert wird.

5. Messvorrichtung (10) gemäß irgendeinem der Ansprüche 1 bis 4, wobei das Messziel (ob) ein Abschnitt eines im Raum vorhandenen Objekts ist.

6. Messvorrichtung (10) gemäß irgendeinem der Ansprüche 1 bis 5, wobei die Messvorrichtung (10) ferner aufweist:

eine Strahlungseinheit (12), die konfiguriert ist, um in einem vorbestimmten Strahlungswinkel eine elektromagnetische Welle auf den ersten Punkt (P1) zu strahlen, der ein Punkt in einem Raum ist, eine erste Detektionseinheit (20), die konfiguriert ist, um eine reflektierte Welle der von der Strahlungseinheit (12) ausgestrahlten elektromagnetischen Welle zu detektieren, wobei die Entfernungsmesseinheit konfiguriert ist, um basierend auf der reflektierten Welle die Entfernungsinformation (d1, d2) zu messen, die eine Entfernung von der Referenzposition (O) zum ersten Punkt (P1) ist, eine zweite Detektionseinheit (17), die konfiguriert ist, um ein Bild des Raums durch Detektieren einer elektromagnetischen Welle aus dem Raum zu erlangen, und eine Steuereinheit (144), die konfiguriert ist, um eine Koordinateninformation zu berechnen, die eine Position eines Punkts im Raum angibt, wobei der Punkt im Bild enthalten ist, basierend auf der Entfernungsinformation (d1, d2), dem Strahlungswinkel und der Position des ersten Punkts (P1) im Bild,
wobei unter elektromagnetischen Wellen, die vom ersten Punkt (P1) aus auf die Messvorrichtung (10) auftreffen, die von der ersten Detektionseinheit (20) detektierte reflektierte Welle und die von der zweiten Detektionseinheit (17) detektierte elektromagnetische Welle eine identische optische Achse haben.

**Revendications**

1.  Appareil de mesure (10), comprenant :

    une unité de mesure de distance configurée pour acquérir des informations relatives à une distance à un premier point (P1) et à une distance à un deuxième point (P2) ; et
    une unité de capture d'image configurée pour acquérir l'image d'une cible de mesure (ob),
    dans lequel l'unité de mesure de distance et l'unité de capture d'image partagent un axe optique,
    dans lequel une résolution de l'unité de mesure de distance est inférieure à une résolution de l'unité de capture d'image, la résolution de l'unité de mesure de distance faisant référence à une résolution d'informations relatives à la distance au premier point (P1) et à la distance au deuxième point (P2) par trame dans une direction plane, et la résolution de l'unité de capture d'image faisant référence à la résolution de l'image, et
    dans lequel les informations relatives à la distance au premier point (P1) et à la distance au deuxième point (P2) sont acquises en recevant une onde réfléchie qui est une onde électromagnétique rayonnée sur le premier point (P1) et le deuxième point (P2) par une unité de rayonnement (12) et réfléchie par une cible (ob),
    l'appareil de mesure (10) étant configuré pour :

    déterminer le premier point (P1) et le deuxième point (P2) qui sont deux points dans un espace dans lequel la cible de mesure (ob) est présente et qui sont utilisés dans la mesure d'une taille de la cible de mesure (ob) ;
    calculer des premières coordonnées spatiales indiquant une position du premier point (P1) dans l'espace et des deuxièmes coordonnées spatiales indiquant une position du deuxième point (P2) dans l'espace sur la base d'informations de distance (d1, d2) relatives à une distance d'une position de référence (O) au premier point (P1) et à une distance de la position de référence (O) au deuxième point (P2), et à une direction d'émission de l'onde électromagnétique qui est rayonnée pour acquérir les informations relatives à la distance au premier point (P1) et à la distance au deuxième point (P2) ;
    déterminer, sur la base d'une image de la cible de mesure (ob), un premier point d'extrémité (P1') et un deuxième point d'extrémité (P2') qui sont deux points avec lesquels la taille de la cible de mesure (ob) est mesurée ;
    calculer des coordonnées de premier point d'extrémité indiquant une position du premier point d'extrémité (P1') dans l'espace et des coordonnées de deuxième point d'extrémité indiquant une position du deuxième point d'extrémité (P2') dans l'espace sur la base des premières coordonnées spatiales et des deuxièmes coordonnées spatiales ; et
    calculer une distance entre le premier point d'extrémité (P1') et le deuxième point d'extrémité (P2') sur la base des coordonnées de premier point d'extrémité et des coordonnées de deuxième point d'extrémité.

2.  Appareil de mesure (10) selon la revendication 1, configuré pour :

    acquérir des informations angulaires relatives à une direction depuis la position de référence (O) vers le premier point d'extrémité (P1') et une direction depuis la position de référence (O) vers le deuxième point d'extrémité (P2') sur la base d'une relation de position entre le premier point (P1) et le premier point d'extrémité (P1') et d'une relation de position entre le deuxième point (P2) et le deuxième point d'extrémité (P2') dans l'image de la cible de mesure (ob) ; et
    calculer les coordonnées de premier point d'extrémité et les coordonnées de deuxième point d'extrémité sur la base des informations angulaires.

3.  Appareil de mesure (10) selon la revendication 1 ou 2,
    comprenant en outre un système de rayonnement (111) ayant un axe de rayonnement (111A) inclus dans une zone dans laquelle une onde électromagnétique rayonnée peut balayer, dans lequel des positions des premières coordonnées spatiales sont identiques à des positions des coordonnées de premier point d'extrémité dans une direction de profondeur de l'espace, lorsqu'on regarde depuis la position de référence (O) le long de l'axe de rayonnement (111A).

**4.** Appareil de mesure (10) selon l'une quelconque des revendications 1 à 3, comprenant en outre une unité de stockage configurée pour :
stocker, en association avec la distance entre le premier point d'extrémité (P1') et le deuxième point d'extrémité (P2'), des informations d'identification identifiées sur la base de l'image de la cible de mesure (ob).

**5.** Appareil de mesure (10) selon l'une quelconque des revendications 1 à 4,
dans lequel la cible de mesure (ob) est une partie d'un objet présent dans l'espace.

**6.** Appareil de mesure (10) selon l'une quelconque des revendications 1 à 5, l'appareil de mesure (10) comprenant en outre :

une unité de rayonnement (12) configurée pour rayonner, à un angle de rayonnement prédéterminé, une onde électromagnétique sur le premier point (P1) qui est un point dans un espace ;
une première unité de détection (20) configurée pour détecter une onde réfléchie de l'onde électromagnétique rayonnée par l'unité de rayonnement (12) ;
l'unité de mesure de distance étant configurée pour mesurer, sur la base de l'onde réfléchie, les informations de distance (d1, d2) qui sont une distance de la position de référence (O) au premier point (P1) ;
une deuxième unité de détection (17) configurée pour acquérir une image de l'espace en détectant une onde électromagnétique provenant de l'espace ; et
une unité de commande (144) configurée pour calculer des informations de coordonnées indiquant une position d'un point dans l'espace, le point étant inclus dans l'image, sur la base des informations de distance (d1, d2), de l'angle de rayonnement et de la position du premier point (P1) dans l'image,
dans lequel, parmi des ondes électromagnétiques qui sont incidentes sur l'appareil de mesure (10) à partir du premier point (P1), l'onde réfléchie détectée par la première unité de détection (20) et l'onde électromagnétique détectée par la deuxième unité de détection (17) ont un axe optique identique.

FIG. 1

# FIG. 2

ELECTROMAGNETIC-WAVE DETECTION APPARATUS ~10

RADIATION SYSTEM ~111

DEFLECTION UNIT ~13

RADIATION UNIT ~12

LIGHT RECEPTION SYSTEM ~110

15  16  D4  se2  19  se1  D3  18  20  17

CONTROL UNIT (IMAGE PROCESSING UNIT) ~14

IMAGE-INFORMATION ACQUISITION UNIT ~141

REFLECTION-INTENSITY-INFORMATION ACQUISITION UNIT ~142

RADIATION CONTROL UNIT ~143

LIGHT-RECEPTION CONTROL UNIT ~144

CALCULATION UNIT ~145

CORRESPONDENCE-INFORMATION CALCULATION UNIT ~146

LENGTH MEASUREMENT CALCULATION UNIT ~147

ob

EP 4 177 564 B1

# FIG. 3

(SPACE)

R

RADIATION WAVE

ELECTROMAGNETIC WAVES INCLUDING REFLECTED WAVE

12

13

17

15

16

18

19

20

# FIG. 4

FIG. 5

# FIG. 6

P1 (Y1, Z1)

ob

$L = \sqrt{(Z1-Z2)^2 + (Y1-Y2)^2}$

Y1−Y2

P2 (Y2, Z2)

Z1−Z2

Y

X

Z

# FIG. 7

P1' (X1', Y1', Z1)

P1 (X1, Y1, Z1)

d1'

ob

d1

111A

θ1'

θ1

O (0, 0, 0)

RADIATION
SYSTEM

L

θ2'

θ2

d2

P2 (X2, Y2, Z2)

d2'

111

P2' (X2', Y2', Z2)

EP 4 177 564 B1

X

Z

Y

# FIG. 8

# FIG. 9

# FIG. 10

# FIG. 11

# FIG. 12

START

ACQUIRE DISTANCE-MEASUREMENT
INFORMATION ITEMS OF AT LEAST
TWO POINTS INCLUDED IN OBJECT — S1

ACQUIRE RADIATION DIRECTIONS TOWARD
TWO DISTANCE-MEASUREMENT POINTS — S2

CALCULATE COORDINATES OF TWO
DISTANCE-MEASUREMENT POINTS — S3

CALCULATE DISTANCE BETWEEN TWO
DISTANCE-MEASUREMENT POINTS — S4

END

# FIG. 13

```
            ┌─────────────┐
            │    START    │
            └─────────────┘
                   │
                   ▼
┌───────────────────────────────────┐
│   ACQUIRE DISTANCE-MEASUREMENT     │
│     INFORMATION ITEMS OF AT LEAST  │──S11
│     TWO POINTS INCLUDED IN OBJECT  │
└───────────────────────────────────┘
                   │
                   ▼
┌───────────────────────────────────┐
│  ACQUIRE RADIATION DIRECTIONS      │
│  TOWARD TWO DISTANCE-MEASUREMENT   │──S12
│  POINTS                            │
└───────────────────────────────────┘
                   │
                   ▼
┌───────────────────────────────────┐
│   CALCULATE COORDINATES OF TWO     │──S13
│   DISTANCE-MEASUREMENT POINTS      │
└───────────────────────────────────┘
                   │
                   ▼
┌───────────────────────────────────┐
│   DETECT TWO END POINTS OF OBJECT  │──S14
│   IN CAPTURED IMAGE                │
└───────────────────────────────────┘
                   │
                   ▼
┌───────────────────────────────────┐
│   CALCULATE ANGLES TO DETECTED     │──S15
│   TWO POINTS IN CAPTURED IMAGE     │
└───────────────────────────────────┘
                   │
                   ▼
┌───────────────────────────────────┐
│   CALCULATE DISTANCES TO DETECTED  │──S16
│   TWO POINTS IN CAPTURED IMAGE     │
└───────────────────────────────────┘
                   │
                   ▼
┌───────────────────────────────────┐
│   CALCULATE SPACE COORDINATES OF   │──S17
│ DETECTED TWO POINTS IN CAPTURED    │
│ IMAGE                              │
└───────────────────────────────────┘
                   │
                   ▼
┌───────────────────────────────────┐
│  CALCULATE LENGTH BETWEEN TWO      │
│  POINTS WHOSE COORDINATES          │──S18
│  HAVE BEEN CALCULATED              │
└───────────────────────────────────┘
                   │
                   ▼
            ┌─────────────┐
            │     END     │
            └─────────────┘
```

# FIG. 14

# FIG. 15

# FIG. 16

```
        ┌─────────────┐
        │    START    │
        └──────┬──────┘
               │
               ▼
┌──────────────────────────────────┐
│      ACQUIRE IMAGE OF OBJECT      │───S21
└──────────────┬───────────────────┘
               │
               ▼
┌──────────────────────────────────┐
│   DETECT ROAD SURFACE AND MEASURE │
│   DISTANCES TO AT LEAST TWO POINTS│───S22
│     INCLUDED IN ROAD SURFACE      │
└──────────────┬───────────────────┘
               │
               ▼
┌──────────────────────────────────┐
│      CALCULATE COORDINATES OF     │
│    DISTANCE-MEASUREMENT POINTS     │───S23
│        OF ROAD SURFACE            │
└──────────────┬───────────────────┘
               │
               ▼
┌──────────────────────────────────┐
│  CALCULATE INCLINATION OF ROAD    │───S24
│            SURFACE                │
└──────────────┬───────────────────┘
               │
               ▼
┌──────────────────────────────────┐
│     DETECT VEHICLE AND MEASURE    │
│     DISTANCE TO POINT LOCATED AT  │───S25
│       TOP SURFACE OF VEHICLE      │
└──────────────┬───────────────────┘
               │
               ▼
┌──────────────────────────────────┐
│      CALCULATE COORDINATES OF     │
│  DISTANCE-MEASUREMENT POINT OF    │───S26
│            VEHICLE                │
└──────────────┬───────────────────┘
               │
               ▼
┌──────────────────────────────────┐
│    CALCULATE HEIGHT OF VEHICLE    │───S27
└──────────────┬───────────────────┘
               │
               ▼
        ┌─────────────┐
        │     END     │
        └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62259004 A
- US 2015062305 A1
- US 2012236320 A1
- US 2016003937 A
- WO 2019216140 A1
- US 2020174101 A1